# EUROPÄISCHE PATENTSCHRIFT

(11) **EP 2 221 248 B1**
(45) Veröffentlichungstag und Bekanntmachung des Hinweises auf die Patenterteilung: **20.08.2014**
(21) Anmeldenummer: 10005302.4
(22) Anmeldetag: 11.03.2003
(51) Int. Cl.: B64F 1/32

(54) **System zum Be- und Entladen von Stückgut in einem Laderaum, insbesondere eines Flugzeugs, sowie Zwischenfördereinrichtung hierfür**
System for loading and unloading unit load into a cargo hold, in particular of an aircraft, and intermediate transport device or corresponding transport unit
Système de chargement et de déchargement de marchandises de détail dans un espace de chargement, en particulier d'une cale d'avion, et système de transport intermédiaire ou unité de transport correspondante

(30) Priorität: 11.03.2002 DE 10210575; 11.03.2002 DE 20212383 U; 21.08.2002 DE 10238249
(43) Veröffentlichungstag der Anmeldung: 25.08.2010
(62) Teilanmeldung aus: 06026625.1
(73) Patentinhaber: Telair International AB, 224 78 Lund (SE)
(72) Erfinder: Helmner, Anders, 23734 Bjärred (SE)
(74) Vertreter: Kuhnen & Wacker

(56) Entgegenhaltungen:
- WO-A-01/51356
- WO-A1-01/44049
- DE-A1- 4 238 095
- DE-A1- 19 719 748
- DE-U1- 29 721 959
- US-A- 5 538 391

## Beschreibung

Die vorliegende Erfindung betrifft ein System zum Be- und Entladen von Stückgut in einem Laderaum eines Flugzeugs.

Beim Be- und Entladen von Stückgut in Laderäume muß dieses generell zunächst von der Umgebung zur Laderaumöffnung und durch diese hindurch gebracht, im Laderaum nach einem freien Platz gesucht und das Stückgut dort abgelegt bzw. aufgestapelt oder verstaut werden. Das Be- und Entladen von Stückgut in einem Laderaum eines Flugzeugs gestaltet sich besonders schwierig, da das Stückgut zunächst - bei einer auf das nähere Umfeld des Flugzeugs beschränkten Betrachtung - vom Rollfeld hinauf zur Laderaumöffnung im Flugzeugrumpf gebracht, dort - unter Vermeidung jeglicher Beschädigung des Flugzeugrumpfes bzw. der diesen ausbildenden Struktur - entgegen genommen und dann an einen freien Platz im Laderaum des Flugzeugs verbracht und ggf. möglichst kompakt gestapelt oder verstaut werden muß. Hierbei sind die häufig engen Raumverhältnisse ein weiteres Erschwernis, da beispielsweise bei einer Laderaumtiefe von 8 m oder mehr und einer Laderaumhöhe von nur etwa 1,15 m in einer Boeing 737 Personal, das mit dem Be- und Entladen des Flugzeugs betraut ist, nur in gebückter, kniender oder gehockter Haltung arbeiten kann. Dabei muß die Entfernung von der Laderaumöffnung zum hinteren Ende des Laderaums auf den Knien rutschend überwunden werden. Beim Verstauen bzw. Stapeln des Stückguts muß das Personal dieses häufig sich über die Schulter nach hinten drehend aufnehmen, hoch wuchten und nach vorne ablegen. Dabei können Beschädigungen oder Verletzungen der Muskeln, Sehnen oder Bänder als auch des Stützapparats leicht auftreten. Weiter erschwerend kommt hinzu, daß aus Wirtschaftlichkeitsgründen heutzutage wenigstens 5 Tonnen Stückgut innerhalb von weniger als 10 Minuten be- oder entladen werden müssen. Hierbei muß das im Flugzeugrumpf im Laderaum beschäftigte Personal zudem darauf achten, daß weder Stückgut beschädigt noch die Struktur des Laderaums verletzt wird. Dies führt dazu, daß die ohnehin den Stützapparat des betroffenen Personals stark belastenden Bewegungen schnell und unachtsam ausgeführt werden, was das Verletzungsrisiko beim Personal weiter steigert.

Um Stückgut vom Rollfeld zur Laderaumöffnung bzw. in den im Inneren des Flugzeugs direkt hinter der Laderaumöffnung liegenden Nahbereich zu bringen, von dem aus es dann vom Personal im Laderaum verstaut werden kann, sind im Prinzip z.B. folgende Ansätze bekannt:
Die DE 199 61 349 A1 beschreibt ein fahrbares Gerät zum Be- und Entladen von Flugzeugen, mit einem Fahrgestell und einer auf dem Fahrgestell angeordneten Fördereinrichtung, wie beispielsweise einem Förderband. Um mittels dieses fahrbaren Geräts verschiedenartige Lasten wie beispielsweise Stückgut, vom Rollfeld oder von einem auf dem Rollfeld beim Flugzeug ankommenden Transportfahrzeugs in das Flugzeug fördern zu können, wird in der DE 199 61 349 A1 vorgeschlagen, daß dieses fahrbare Gerät einen Hauptförderer aufweist, der in seiner Höhe und in seiner in Förderrichtung verlaufenden Neigung gegenüber dem Fahrgestell verstellbar ist, sowie mindestens einen an einem Längsende des Hauptförderers um eine horizontale Querachse gegenüber diesem verschwenkbaren Übergabeförderer aufweist. Mit einem solchen fahrbaren Gerät kann Stückgut vom Rollfeld nach oben zur Laderaumöffnung des Flugzeugs verbracht und durch diese hindurch ins Flugzeug hinein übergeben werden.

Da jedoch nicht auf jedem Flughafen solcherlei fahrbares Transportgerät zur Verfügung steht, ist in der DE 297 21 959 U1 vorgeschlagen worden, ein solches Gerät im Flugzeug mitzuführen. Die in der DE 297 21 959 U1 beschriebene Gepäckladevorrichtung für Flugzeuge mit einem Bandförderer ist auf einer Flugzeugfrachtpalette montiert und im Flugzeugrumpf verstaut. Beim Betrieb wird der Bandförderer aus der Ladeöffnung des Flugzeugs herausgefahren, zum Rollfeld nach unten geschwenkt, die erforderliche Länge eingestellt und mit dem unteren Ende dann auf dem Rollfeld abgestützt, so daß Stückgut vom Rollfeld zur Laderaumöffnung hinauf befördert oder aus dieser heraus hinunter transportiert werden kann.

Die WO 98/54073 beschreibt ein mit dessen vorderen Abschnitt durch eine Laderaumöffnung in den Laderaum eines Flugzeugs hineinführbares, dort wiederum über den Laderaumboden vermittels Rollen verfahrbares Förderorgan, das ein vom Rollfeld bis zum hinteren Ende des Laderaum führendes Förderband bereit stellen soll, zur Unterstützung des auch hier manuell von einer Person auszuführenden Be- und Entladevorgangs. Zum Betrieb des Förderorgans wird dieses auf dem Rollfeld an das Flugzeug herangeführt, ein erster Abschnitt einer schiefen Ebene gleichend auf die Höhe der Laderaumöffnung gebracht, ein weiterer Abschnitt in die Laderaumöffnung hineingeführt, dort um 90° umgebogen und dann ein weiterer Abschnitt parallel zur Bordwand im Laderaum von der Laderaumöffnung bis zum hinteren Ende des Laderaums erstreckt. Ein zusätzlicher Tisch, der am hinteren Ende auf dem Boden aufgerichtet wird, soll sich über die gesamte Breite des Laderaums erstrecken und kann in der Höhe variiert werden. Damit können Koffer, Säcke oder dergleichen Güter Be- und Entladen werden, wobei diese Güter beim Beladen vermittels des Förderbandes vom Rollfeld bis zum Ende des Förderbandes im Laderaum vor den Tisch transportiert und dort von der am Tisch knieenden Person auf den Tisch gezogen und über diesen weiterziehend dann oben auf den aufzuschichtenden Stückgutstapel geschoben werden. Das in der WO 98/540734 beschriebene Gerät hat zum Nachteil, daß sowohl bei unsachgemäßer Handhabung des Tisches als auch bei nicht sachgemäßer Handhabung des Förderorgans eine Verletzung bzw. Beschädigung der Flugzeugstruktur zwangsläufig zu befürchten ist. Wenn der Tisch mit darauf liegendem Stückgut in belastetem Zustand in der Höhe verändert wird, besteht die Gefahr, daß dessen an die Bordwand angrenzenden Enden diese sofort beschädigen. Beim Einführen des extrem langen und unhandlichen Förderbandes ist eine Beschädigung der Laderaumöffnung nicht auszuschließen. Zudem ist dieses Hilfsgerät wenig hilfreich, da es immer dann, wenn eine Stückgutreihe aufgeschichtet ist, um ein Stück zurückgefahren, neu positioniert und mit dem ebenfalls neu auszurichtenden Tisch verbunden werden muß.

In der DE 100 07 332 A1 ist eine alternative Ausführungsform eines auf dem Rollfeld verfahrbaren Basisfahrzeugs mit einem bis in den Laderaum hineinreichenden endlosen Förderband diskutiert. Die DE 100 07 332 A1 schlägt ein reversierbares Fördermittel für Stückgüter mit schwenkbarem und in der Höhe und Länge verstellbaren Ausleger zum Be- und Entladen von Reisegepäckstücken bei Passagierflugzeugen vor. Zwischenübergabestationen sollen vermieden werden. Den Umschlag der Gepäckstücke bzw. das Verstauen und Entnehmen derselben im Laderaum bewerkstelligen auch hier wiederum Personen vor Ort von Hand.

Um die Arbeit des Personals im Laderaum zu erleichtern, ist von der Anmelderin beispielsweise in der DE 42 38 095 A1 eine Beladevorrichtung für einen Laderaum eines Flugzeugs vorgeschlagen worden. Diese im rauhen Alltag beim Be- und Entladen von Flugzeugen bewährte Laderaumbeladevorrichtung wird von der Anmelderin u. a. mit dem Prospekt "The sliding carpet loading system" erfolgreich beworben. Diese den Boden des Laderaums flächig abdeckende Transporteinrichtung dient zur, insbesondere taktweisen, Förderung des Stückgutes in Richtung auf das Innere des Laderaumes bzw. dessen hinteres Ende beim Beladen bzw. von diesem weg beim Entladen, wobei die Transporteinrichtung mit deren vorderem Ende bis in den Bereich der Laderaumöffnung im Flugzeugrumpf reicht, und ist in einer besonders erfolgreichen Ausführungsform als Transportteppich ausgestaltet.

Die WO 01/51356 A1 offenbart ein Gerät zum Beladen und Entladen von Luftfahrzeugen, das einen höheneinstellbaren und kippbaren ersten Förderer aufweist, der dazu angepasst ist, Fracht zwischen einem Bereich außerhalb des Frachtabteils und einem zweiten Förderer zu befördern. Der zweite Förderer hat ein erstes Ende und ein zweites Ende und ist zumindest teilweise von dem Gerät in das Frachtabteil ausfahrbar. Der zweite Förderer weist eine Folge von Fördereinheiten auf, von denen eine erste Endfördereinheit an dessen erstem Ende angeordnet ist, wobei jede Fördereinheit einen Satz Räder aufweist, und wobei die Fördereinheiten abwechselnd mittels Kopplungsteilen zwischenverbunden sind, die eine seitliche, wechselweise Kippbewegung der Fördereinheiten gestatten.

Die DE 197 19 748 A1 beschreibt eine Vorrichtung sowie ein Verfahren zum Handhaben von Stückgütern, insbesondere von Paketen, für das Beladen und Entladen eines Laderaumes, in dem die Stückgüter übereinander gestapelt bzw. zu stapeln sind und der wenigstens einseitig horizontal zugänglich ist, mit einer Transporteinheit, die die Stückgüter zum Laderaum bzw. von diesem weg transportiert. Dabei ist wenigstens eine Sauggreifervorrichtung vorgesehen, die horizontal an ein Stückgut positionierbar ist, dieses mittels Unterdruck an einer Seite des Stückguts lösbar fest erfasst und weitgehend horizontal verbringt. Ferner ist ein Fördersystem vorgesehen, das eine Übergabe von Stückgütern von oder zu der Transporteinheit ermöglicht, und das die Sauggreifervorrichtung die Stückgüter vereinzelt direkt von dem Fördersystem in den Laderraum oder aus dem Laderraum direkt auf das Fördersystem verbringt.

Die US 5,538,391 offenbart eine Vorrichtung zur Handhabung von Gegenständen mit einer keilförmigen, einschiebbaren Palette, die zumindest eine angetriebene Rolleneinrichtung hat, um den Gegenstand längs der Palette zu bewegen, wobei die vorderste angetriebene Rolleneinrichtung von der Vorderkante der keilförmigen einschiebbaren Palette durch den vorderen Bereich der einschiebbaren Palette beabstandet ist.

Die WO 01/44049 A1 lehrt ein fahrbares Gerät zum Be-und Entladen von Flugzeugen, mit einem Fahrgestell und einer auf dem Fahrgestell angeordneten Födereinrichtung. Um mittels der Einrichtung verschiedenartige Lasten fördern zu können, wird vorgeschlagen, dass die Fördereinrichtung einen in seiner Höhe und in seiner in Förderrichtung verlaufenden Neigung gegenüber dem Fahrgestell verstellbaren Hauptförderer sowie mindestens einen an einem Längsende des Hauptförderers um eine Horizontale Querachse gegenüber diesem verschwenkbaren Übergabeförderer aufweist.

Die DE 297 21 959 U1 offenbart eine mobile Gepäckladevorrichtung für Flugzeuge mit einem Bandförderer, die auf einer Flugzeugfrachtpalette montiert ist und bedarfsweise im Flugzeugrumpf aufstellbar ist, wobei der Bandförderer zur Gepäckbe-/-entladung aus einer Ladeluke des Flugzeugs herausfahrbar ist.

Diese Geräte bzw. Transporteinrichtungen helfen zwar, den Einsatz menschlicher Arbeitskraft im Laderaum zu erleichtern oder zu reduzieren, sie machen jedoch den Einsatz menschlicher Arbeitskraft, insbesondere im Bereich der Laderaumluke, immer noch erforderlich. Personal muß auch weiterhin in äußerst unbequemer Arbeitshaltung das vom äußeren Förderorgan vom Rollfeld zur Laderaumöffnung hinauf beförderte Gepäck bzw. Stückgut entgegennehmen und über die Breite des Flugzeugrumpfes auf dem vorderen Ende der beispielsweise als Transportteppich ausgebildeten Transporteinrichtung im Laderaum ablegen und mit deren Hilfe sukzessive in das Innere des Laderaums befördern. Dementsprechend muß zum Entladen wiederum Personal eingesetzt werden, das mittels der Transporteinrichtung im Laderaum das Stückgut sukzessive zu sich in den Bereich der Laderaumöffnung heranholt, das Stückgut aufnimmt, in beschwerlicher Haltung, sei es gebückt oder gehockt zum in die Laderaumöffnung hineinragenden Ende der äußeren Fördereinrichtung schleppt, dort aufgibt und mit der äußeren Fördereinrichtung dann zum Rollfeld hinunter befördert.

Zudem ist das mit diesen Arbeiten betraute Personal häufig schlecht bezahlt, unzureichend ausgebildet und damit nur ungenügend motiviert. Dementsprechend kommt es oft zu versehentlichen Beschädigungen der Flugzeugstruktur im Laderaum und insbesondere im Bereich der Laderaumöffnung, obgleich diese ausdrücklich vermieden werden sollen. Dies führt dann bei deren Auftreten zu immensen Kosten aufgrund der erforderlichen Reparaturen und des damit verbundenen Stillstands des Flugzeugs.

Dementsprechend ist es Aufgabe der vorliegenden Erfindung, ein System vorzuschlagen, mit dem die bekannten Transporteinrichtungen im Laderaum des Flugzeugs mit den außerhalb des Flugzeugs befindlichen Förderorganen so zu einem Gesamtkonzept kombiniert werden können, daß Stückgut vom Rollfeld beim Beladen in den Laderaum verbracht und dort verstaut und beim Entladen wieder aus dem Laderaum zurück auf das Rollfeld transportiert werden kann, ohne dabei die Gesundheit des eingesetzten Personals zu gefährden.

Die vorliegende Offenbarung schlägt ein System zum Be- und Entladen von Stückgut in einem Laderaum eines Flugzeugs vor, mit einer den Boden des Laderaums flächig abdeckenden Transporteinrichtung zur, insbesondere taktweisen, Förderung des Stückgutes in Richtung auf das innere Ende des Laderaums beim Beladen bzw. von diesem weg beim Entladen, wobei die Transporteinrichtung mit deren vorderen Ende bis in den Bereich der Laderaumöffnung im Flugzeugrumpf reicht, und mit einem der Außenseite des Flugzeuges an die Laderaumöffnung anschließenden Förderorgans zum Transport des Stückgutes zwischen der Rollfeldebene und der Laderaumöffnung, wobei vorgesehen ist, daß zwischen den flugzeugseitigen Ende des Förderorgans und dem vorderen Ende der Transporteinrichtung im Laderaum wenigstens eine Zwischenfördereinrichtung angeordnet ist, mit der das Stückgut beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung im Laderaum ablegbar ist, und mit der beim Entladen über das vordere Ende der Transporteinrichtung hinaus in die Ebene der Laderaumöffnung gefördertes Stückgut quer zur Flugzeuglängsachse durch die Laderaumöffnung hinauf weg förderbar ist.

Auf diese Weise werden nicht nur die damit verbundenen Personalkosten eingespart und somit Betriebskosten gesenkt, sondern zugleich das Beschädigungsrisiko der Struktur im Laderaum gegen Null reduziert. Mit der Reduzierung des Beschädigungsrisikos wird in vorteilhafter Weise zugleich das Risiko der Nutzungsausfallzeit für Reparaturen solcher Beschädigungen und damit die enorm hohen Reparaturkosten im Prinzip auf Null herunter gefahren. Weiterhin wird durch das erfindungsgemäße System erstmals bei einer Be- und Entladung des Laderaums eine optimale Ausnutzung der verfügbaren Laderaumfläche als auch des verfügbaren Laderaumvolumens ermöglicht, da in einer bevorzugten Ausführungsform das erfindungsgemäße System mit geeigneten Sensoren, Kameras, Regelkreisen und/oder künstlicher Intelligenz ausgestaltet werden kann, so daß das Stückgut nicht nur automatisch sondern gezielt dort im Laderaum abgelegt bzw. verstaut werden kann, wo beispielsweise noch Lücken frei sind.

Des weiteren kann die Transporteinrichtung dauerhaft im Laderaum des Flugzeugs montiert sein. Hierbei kann in vorteilhafter Weise auf die von Flugzeugtyp zu Flugzeugtyp unterschiedlichen Randbedingungen, wie beispielsweise örtliche Verfügbarkeit von zur Aufnahme und Ableitung von Kräften vorgesehener Lastaufnahmepunkte in der Struktur, räumliche Abmaße des Laderaums, geometrische Ausgestaltung des Laderaums, Lage der Laderaumöffnung relativ zum Laderaum, etc., angepaßt werden. Bei einem auf diese Weise an die örtlichen Gegebenheiten eines bestimmten Flugzeugtyps angepaßten erfindungsgemäßen System zum Be- und Entladen des Laderaums ist eine unbeabsichtigte Verletzung der Flugzeugstruktur im Bereich des Laderaums und insbesondere im Bereich der Laderaumöffnung vollständig ausgeschlossen, da durch die Befestigung der Zwischenfördereinrichtung im Laderaum selbige während deren Einsatz nicht durch die Laderaumöffnung hindurch in den Laderaum verbracht werden muß, so daß die dabei zu befürchtenden Beschädigungen definitiv ausbleiben.

Hierzu kann das vorgeschlagene System mit der Zwischenfördereinrichtung beispielsweise aus besonders leichten Materialien, wie zwischenzeitlich verfügbares hochfestes Aluminium, Kohlefaserverbundwerkstoffen oder Composites hergestellt werden. Bei Verwendung entsprechend steifer Profile aus solchen Materialien ist ein derart zufriedenstellend geringes Gesamtgewicht der Zwischenfördereinrichtung realisierbar, daß ein Verbleib der Zwischenfördereinrichtung im Laderaum des Flugzeugs hinsichtlich dessen maximal verfügbarer Transportkapazität nicht negativ ins Gewicht fällt. Derlei biegesteife und zugleich extrem leichte Profile bieten nicht nur den Vorteil eines insgesamt besonders geringen Gewichts der Zwischenfördereinrichtung, sie ermöglichen zudem die Herstellung einer Zwischenfördereinrichtung, die problemlos den hohen Belastungen im alltäglichen Betrieb gewachsen ist, wie beispielsweise mit Blick auf das teilweise hohe Gewicht von damit zu förderndem Stückgut oder mit Blick auf die hohen Lastspitzen bei großen Maßendurchsätzen an Stückgut für ein besonders schnelles Be- und/oder Entladen.

Bei dem erfindungsgemäßen System ist die Zwischenfördereinrichtung mechanisch mit dem auf dem Rollfeld verfahrbaren Förderorgan verbunden. Dabei kann das auf dem Rollfeld verfahrbare Förderorgan an dessen der Laderaumöffnung zugewandten Ende um die Zwischenfördereinrichtung im wesentlichen geradlinig verlängert werden. Dies bietet den Vorteil, daß weniger auf das Gewicht zu achten ist, und die Zwischeneinrichtung damit materialtechnisch preiswerter und dennoch ausreichend fest bzw. belastbar ausgestaltet werden kann. Bei dieser bevorzugten Kombination ist eine Beschädigung des direkten Bereichs um die Laderaumöffnung nicht gänzlich auszuschließen, da die Zwischenfördereinrichtung quer zur Flugzeuglängsrichtung durch die Laderaumöffnung eingebracht und positioniert werden muß. Bei entsprechend verständiger Arbeitsweise ist dieses Beschädigungsrisiko jedoch unbeachtlich. Zudem ist eine Beschädigung des Laderaums als solchem bzw. der diesen ausbildenden Struktur auf jeden Fall auszuschließen.

Mit dem erfindungsgemäßen System mit der Zwischenfördereinrichtung kann die Zeit für das Be- und Entladen eines Flugzeugs verkürzt und somit die Betriebskosten gesenkt werden.

So können bei dem erfindungsgemäßen System die beim Be- und Entladen bewegten Stückgüter auf der Transporteinrichtung im Laderaum beim Beladen gezielt abgelegt und beim Entladen von dort gezielt aufgenommen bzw. weg gefördert werden. Dies bietet den großen Vorteil, daß der verfügbare Laderaum und insbesondere dort freie Flächen optimal mit Ladegut, Stückgut, Gepäckstücke oder dgl. belegt werden kann. Insbesondere bei einer Automatisierung vermittels entsprechender Sensoren, Kameras, Regelkreisen, künstlicher Intelligenz oder dgl. kann der Beladungszustand des Laderaums permanent überwacht und das System entsprechend darauf abgestellt werden.

Hierfür kann beispielsweise über dem Boden des Laderaums horizontal zwischen der Zwischenfördereinrichtung und dem Boden des Laderaums im Bereich der Laderaumöffnung eine den Boden des Laderaums als auch den bodenseitigen Bereich der Laderaumöffnung flächig abdeckende Schale angeordnet sein. Diese Schale, insbesondere Auffangschale, bietet zugleich den Vorteil, daß auch bei bis in den unteren Bereich des Rumpfes hinein gezogenen Laderaumöffnungen die volle Breite des Laderaums mit Stückgut beladen werden kann, ohne das die Gefahr besteht, daß Stückgut bei einem nie gänzlich auszuschließenden "über Eck Abrutschen" von dem der Laderaumöffnung zugewandten Ende des äußeren Förderorgans herunter und zwischen dem Förderorgan und der Laderaumöffnung hindurch im schlimmsten Fall bis zum Rollfeld hinunter fällt.

Beispielsweise ist die Schale, insbesondere Auffangschale, die auch als "Door Way Unit" (kurz: DWU) bezeichnet wird, entlang einer Linie parallel zur Flugzeuglängsachse um- oder einklappbar. Damit wird in weiter vorteilhafter Weise sichergestellt, daß nach einem Be- oder Entladevorgang jener Abschnitt dieser Schale bzw. DWU, welcher der Laderaumöffnung benachbart ist, aus dem Nahbereich der Laderaumöffnung heraus ins Innere des Laderaums zur Mitte hin umgeklappt werden kann, so daß danach die Laderaumöffnung vollständig frei gegeben und mit der Laderaumtüre verschließbar ist.

Gemäß einer Ausführungsform ist vorgesehen, daß die Transporteinrichtung im Laderaum ein Transportteppich ist. Dies bietet neben dem Vorteil einer kontinuierlichen, diskontinuierlichen oder taktweisen Förderung des Stückgutes ins Innere des Laderaums hinein zudem ein wesentliches Platzsparpotential, da ein solcher Transportteppich eine besonders geringe Bauhöhe aufweist und damit wenig Staukapazität des Laderaums für den Einbau einer z.B. als Transportteppich ausgebildeten Transporteinrichtung verloren geht.

Die Zwischenfördereinrichtung kann wenigstens ein in Förderrichtung längenveränderbares erstes Förderorgan, vorzugsweise ein Förderband, aufweisen.

Dieses nimmt beim Beladen Stückgut im Bereich der Laderaumöffnung vom flugzeugseitigen Ende des äußeren Förderorgans entgegen und fördert dieses quer zur Flugzeuglängsachse weiter, wobei sich an dessen flugzeugrumpfinneren Ende ein weiteres Förderorgan, vorzugsweise ein Förderband anschließt, welches das Stückgut im ersten Förderorgan entgegennimmt und in Flugzeuglängsrichtung zum vorderen Ende der im Laderaum vorhandenen Transporteinrichtung befördert. Damit wird in vorteilhafter Weise das Entgegennehmen von Stückgut im Bereich der Laderaumöffnung und dessen Weitertransport 90° um die Ecke auf engstem Raum, und zugleich optimal an die jeweilige Breite unterschiedlicher Flugzeugtypen angepaßt, sichergestellt.

Erfindungsgemäß nimmt das zweite Förderorgan beim Entladen Stückgut vom vorderen Ende der im Laderaum vorhandenen Transporteinrichtung auf und fördert dies in Flugzeuglängsrichtung weg und übergibt es an das erste Förderorgan, welches das Stückgut quer zur Flugzeuglängsachse zur Laderaumöffnung fördert und an das äußere Förderorgan zur Weiterförderung übergibt. Damit wird in vorteilhafter Weise auch ein Entladen des Stückguts mit einer Bewegung desselben 90° um die Ecke aus dem Laderaums heraus in den Nahbereich der Laderaumöffnung hinein garantiert.

Beispielsweise verfügt das flugzeugrumpfinnere Ende des ersten Förderorgans der Zwischenfördereinrichtung über eine Schulter, die an einer im Gepäckladeraum senkrecht orientierten ersten Schiene längs derselben vertikal verschieblich angelenkt ist. Damit kann in vorteilhafter Weise eine Höhenverstellung des Endpunktes des ersten Förderorgans realisiert werden. Somit ist sichergestellt, daß Stückgut über die volle Höhe des Laderaums gestapelt werden kann.

Entsprechend diesem Beispiel ist vorgesehen, daß die senkrecht orientierte erste Schiene ihrerseits von wenigstens einer an der Decke oder im Boden befestigten waagerecht orientierten zweiten Schiene geführt ist. Damit kann eine Verschiebung des Anlenkpunktes quer zur Flugzeuglängsachse über die Breite des Flugzeugrumpfes sichergestellt werden. Somit ist in vorteilhafter Weise garantiert, daß Stückgut nicht nur über die gesamte Höhe an einem Punkt des Laderaums sondern über dessen gesamte Breite und aufgrund der in die Tiefe fördernden Transporteinrichtung auch über dessen gesamte Tiefe und damit über dessen gesamtes Volumen gestapelt bzw. hinein transportiert und beim Entladen natürlich wieder herausgeholt werden kann.

Das zweite Förderorgan der Zwischenfördereinrichtung ist relativ zum ersten Förderorgan derselben quer zur Flugzeuglängsachse verschieblich gelagert. Damit wird in vorteilhafter Weise der Operationsradius des zweiten Förderorgans der Zwischenfördereinrichtung wesentlich erweitert. In einer weiter bevorzugten Ausführungsform des Systems ist das zweite Förderorgan in Flugzeuglängsrichtung längenveränderbar. Auf diese Weise kann der Operationsradius der Zwischenfördereinrichtung ebenfalls vorteilhaft vergrößert werden. Insbesondere ist damit sichergestellt, daß bei besonders breiten Laderaumöffnungen im Vergleich zu einer relativ schmalen Zwischenfördereinrichtung Stückgut dennoch in Flugzeuglängsrichtung bis zum vorderen Ende der im Laderaum befindlichen Transporteinrichtung gefördert und an diese übergeben wird.

Beispielsweise ist das zweite Förderorgan als ein in Flugzeuglängsrichtung beweglicher Schieber ausgebildet. Dies bietet eine kostengünstige Alternative zur Ausgestaltungsvariante in Form eines Förderbandes. Darüber hinaus läßt sich die Ansteuerung und Funktionsweise eines längsbeweglichen Schiebers mit entsprechenden Stellgliedern bzw. Endschaltern einfacher ausbilden. Dem gegenüber bietet die Ausgestaltungsform eines Förderbandes den Vorteil des geringen Verschleißes und der höheren Durchsatzraten.

Beispielsweise ist das zweite Förderorgan als eine schräg anstellbare Gleitfläche ausgebildet. Dies ist im Prinzip die einfachste Variante, wie Stückgut quer zur Hauptförderrichtung des ersten Förderorgans der Zwischenfördereinrichtung, also in Längsrichtung in den Laderaum hinein durch sanftes Abgleiten transportiert werden kann.

In einem weiteren Beispiel verfügt das Förderorgan zum Entladen über einen Greifer zum Erfassen von Stückgut. Dieser Greifer kann so ausgebildet sein, daß er mit dem Erfassen eines Stückgutes an dessen Griff zupackt, dieses auf das zweite Förderorgan der Zwischenförderorgan zieht und von diesem weg transportieren läßt. Dieser Greifer kann in einer besonders bevorzugten Ausführungsform mit Sensoren, Kameras, Regelkreisen und/oder künstlicher Intelligenz ausgestattet sein, so daß gezielt bestimmte Gepäckstücke bzw. Stückgüter aus dem Laderaum heraus ausgewählt und ergriffen werden können.

Beispielsweise ist das zweite Förderorgan der Zwischenfördereinrichtung ein Förderband, das über einer darunter angeordneten steifen Gleitplatte verläuft, wobei die Gleitplatte mit dem Förderband zwischen zwei Stückgüter einschiebbar ist und wobei das obere Stückgut mit dem Förderband wegförderbar ist. Damit kann eine kostengünstige Variante zum möglichst effizienten Entladen des Laderaums bereitgestellt werden.

Bei einem Beispiel für Zwischenfördereinrichtung zum Be- und Entladen von Stückgut in Laderäumen von Flugzeugen, zur Verwendung in einem vorstehend diskutierten System zum Be- und Entladen von Stückgut, kann diese wenigstens ein in Förderrichtung längenveränderbares erstes Förderorgan, vorzugsweise ein Förderband, aufweisen, das beim Beladen Stückgut im Bereich der Laderaumöffnung vom flugzeugseitigen Ende des äußeren Förderorgans entgegennimmt und quer zur Flugzeuglängsachse weiterfördert. Dabei schließt sich an dessen flugzeugrumpfinneres Ende ein weiteres Förderorgan an, vorzugsweise ein Förderband, welches das Stückgut vom ersten Förderorgan entgegen nimmt und in Flugzeuglängsrichtung zum vorderen Ende der im Laderaum vorhandenen Transporteinrichtung weiter fördert und auf dieser ablegt. Beim Entladen nimmt das zweite Förderorgan der Zwischenfördereinrichtung Stückgut vom vorderen Ende der im Laderaum vorhandenen Transporteinrichtung auf, fördert dieses in Flugzeuglängsrichtung weg und übergibt es an das erste Förderorgan der Zwischenfördereinrichtung, welches das Stückgut quer zur Flugzeuglängsachse zur Laderaumöffnung weiter transportiert und dort an das äußere Förderorgan zur Weiterförderung übergibt.

In einem weiteren Beispiel eines Systems verfügt das flugzeugrumpfinnere Ende des ersten Förderorgans der Zwischenfördereinrichtung über eine Schulter, mittels der es an einer beispielsweise im Gepäckladeraum im wesentlichen senkrecht orientierten ersten Schiene längs derselben vertikal verschieblich angelenkt ist. Damit kann in vorteilhafter Weise eine Höhenverstellung des dem Flugzeuginneren zugewandten Ende des ersten Förderorgans über die gesamte Höhe des Gepäckladeraums sichergestellt werden. Damit wird, wie vorstehend bereits zum System diskutiert, der Vorteil erreicht, daß die gesamte Ladehöhe des Gepäckraums nutzbar wird.

Dementsprechend ist bei diesem Beispiel die senkrecht orientierte erste Schiene ihrerseits von wenigstens einer an der Decke und dem Boden befestigten waagerecht orientierten zweiten Schiene geführt ist, zur Verschiebung des Anlenkpunktes quer zur Flugzeuglängsachse.

Damit ist nicht nur sichergestellt, daß die gesamte Breite des Laderaums nutzbar wird, sondern es wird auch eine möglichst stabile, verwindungsfreie Konstruktion erzielt. Anstelle einer am Boden oder an der Decke befestigten, waagerecht orientierten zweiten Schiene kann die erste Schiene auch in waagerechter Richtung in einem entsprechend ausgebildeten Gestell oder Rahmen, welches seinerseits am äußeren Förderorgan befestigt ist, geführt sein, so daß auch bei der Variante einer am äußeren Förderorgan befestigten Zwischenfördereinrichtung die volle Nutzbarkeit der gesamten Laderaumbreite und Tiefe als auch Höhe in vorteilhafter Weise gewährleistet ist.

Dabei wird ein System zum Be- und Entladen von Stückgut in einem Laderaum, insbesondere eines Flugzeugs, mit einer den Boden des Laderaums flächig abdeckenden Transporteinrichtung zur, insbesondere taktweisen, Förderung des Stückgutes in Richtung auf das innere Ende des Laderaums beim Beladen bzw. von diesem weg beim Entladen, wobei die Transporteinrichtung mit deren vorderem Ende bis in den Bereich der Laderaumöffnung im Flugzeugrumpf reicht, und mit einem an der Außenseite des Flugzeuges an die Laderaumöffnung anschließenden Förderorgan zum Transport des Stückgutes zwischen der Rollfeldebene und der Laderaumöffnung, vorgeschlagen. Bei diesem System ist erstmals zwischen dem flugzeugseitigen Ende des äußeren Förderorgans und dem vorderen Ende der Transporteinrichtung im Laderaum wenigstens eine Zwischenfördereinrichtung angeordnet, mit der das Stückgut beim Beladen zunächst im wesentlichen quer zur Flugzeuglängsachse tiefer in den Flugzeugrumpf hinein förderbar ist, und woraufhin das Stückgut dann im Laderaum manuell drehbar und weiter im wesentlichen in Flugzeuglängsrichtung beförderbar und auf dem vorderen Ende der Transporteinrichtung im Laderaum ablegbar ist, und mit der beim Entladen über das vordere Ende der Transporteinrichtung hinaus in die Ebene der Laderaumöffnung gefördertes Stückgut im wesentlichen quer zur Flugzeuglängsachse durch die Laderaumöffnung hindurch weg förderbar ist.

Dieses zweite Beispiel zum vorstehend diskutierten ersten Beispiel bietet im wesentlichen dieselben Vorteile, wie sie vorstehend zur ersten Variante des Systems diskutiert worden sind.

Darüber hinaus ergeben sich bei einer teilautomatischen Variante des erfindungsgemäßen Systems weitere Vorteile. So kann beispielsweise die Arbeitskraft ohnehin vorhandenen Bodenpersonals beim Be- und Entladen von Flugzeugen weiterhin genutzt werden. Arbeitsplätze werden nicht unnötig wegrationalisiert. Die Arbeitsbedingungen bei den derart erhaltenen Arbeitsplätzen werden wesentlich verbessert. Denn die im Laderaum tätige Person ist beim Be- und Entladen von Stückgut nicht mehr länger der Gefahr ausgesetzt, daß sie irgendwelche schweren Gepäckstücke mit einer entsprechenden Verdrehung des Oberkörpers bzw. des Rückgrates gegenüber der Hüfte mit entsprechendem Kraftaufwand über die Schulter beispielsweise von hinten rechts unten nach vorne links oben oder umgekehrt oder anders wuchten müßte. Damit sind die aus dem Stand der Technik bekannten und vorstehend diskutierten massiven Gefährdungen des Rückgrates oder der Bandscheiben mit den daraus resultierenden Langzeitschädigungen des im Laderaum tätigen Personals, die selbst bei den aus der DE 100 07 332 A1 oder der aus der WO 98/54073 bekannten Fördereinrichtungen nicht vermieden sind, bei dem hier diskutierten erfindungsgemäßen System ausgeschlossen.

Denn eine im Laderaum tätige Person braucht lediglich die von draußen automatisch heran und in den Laderaum hinein geförderten Stückgüter, beispielsweise im Bereich der Laderaumöffnung mit in Fahrzeuglängsrichtung orientierter Brust bzw. orientiertem Blick z.B. sitzend oder kniend, durch die seitlich von dieser Person befindliche Laderaumöffnung entgegenzunehmen. Dann kann sie das vor sich auf der Zwischenfördereinrichtung drehbar liegende Stückgut ohne Belastung des Rückens und besonderen Kraftaufwand drehender Weise in Richtung Flugzeuglängsrichtung ausrichten, um es dann mit einem leichten Schubs von sich weg zur den Boden des Laderaums flächig abdeckenden Transporteinrichtung hin weiter zu bewegen.

Das aus dem Stand der Technik bekannte, gesundheitsgefährdende Wuchten, Werfen oder Heben von Gepäckstücken mit Verdrehung des Rückens von der Hüfte über die Schulter entfällt dabei völlig. Damit werden Arbeitsplätze nicht nur gesichert, sondern zugleich das Verletzungsrisiko drastisch reduziert und dennoch zugleich die Produktivität und Effizienz beim Be- und Entladen von Stückgut gegenüber aus dem Stand der Technik bekannten Lösungen wesentlich gesteigert. Nicht zuletzt hilft ein derart verbesserter Arbeitsplatz das Arbeitsklima zu erhöhen, die Motivation der Mitarbeiter zu steigern, was sich schließlich wiederum in einer erhöhten Effizienz bemerkbar macht.

Darüber hinaus ergeben sich weitere Vorteile. So können mit dem erfindungsgemäßen System auf Flugplätzen bereits vorhandene, bodengestützte Fördereinrichtungen, mittels derer Stückgut vom Rollfeld in den Bereich der Laderaumöffnung des Flugzeugs gebracht werden kann, weiterhin uneingeschränkt genutzt werden. Eine Außerdienststellung oder gar Verschrottung derselben wird damit vermieden. Dies hilft enorm Kosten einzusparen.

Zudem wird deren Nutzbarkeit mit dem erfindungsgemäßen System wesentlich erweitert. Dabei geschieht dies im Vergleich zu Lösungen, wie sie beispielsweise die DE 100 07 332 A1 oder die WO 98/54073 vorschlägt, die pro realisierter Anlage leicht EUR 200.000 und mehr kosten können, besonders preiswert. Denn die erfindungsgemäße Zwischenfördereinrichtung verlangt mit einem geschätzten Anschaffungsvolumen von etwa EUR 5.000 und damit 1/40 der vorgenannten Summe keine großen Investitionen. Selbst wenn man bei einer derartigen Wirtschaftlichkeitsbetrachtung davon ausgehen würde, daß die den Boden des Laderaums flächig abdeckende Transporteinrichtung mit in die Kalkulation einzubeziehen ist, und man deren Anschaffungsvolumen auf etwa EUR 35.000 taxieren würde, so ergäben sich Gestehungskosten für das erfindungsgemäße System von etwa EUR 40.000, die gegenüber der vorgenannten Summe immer noch lediglich 1/5 darstellen. Damit ergibt sich gegenüber bekannten Lösungen ein wesentlicher Kostenvorteil.

Darüber hinaus ist das erfindungsgemäße System wesentlich einfacher zu warten, was zu deutlich geringeren Instandhaltungskosten führt. Unabhängig davon ist das erfindungsgemäße System einfach in seiner Handhabung bzw. Bedienung, so daß damit arbeitendes Personal nicht aufwändig geschult werden muß. Wenn man dann noch berücksichtigt, daß bereits ein kleinerer Flughafen beispielsweise fünf Fördereinrichtungen benötigt, um damit gleichzeitig gerade einmal fünf Flugzeuge abfertigen zu können, was noch kein großes Flugaufkommen darstellt, so ist man bei Lösungen nach dem Grundprinzip der DE 100 07 332 A1 oder der WO 98/54073 schnell bei Investitionsvolumina größer als EUR 1.000.000, denen dann im genannten Beispiel lediglich Investitionen von im schlimmsten Fall EUR 200.000 beim erfindungsgemäßen System gegenüberstünden. Der wirtschaftliche Vorteil ist damit unübersehbar.

Darüber hinaus bietet das erfindungsgemäße System den unschätzbaren Vorteil, daß aufgrund der leichten Handhabbarkeit eine Positionierung der Zwischenfördereinrichtung zur Überbrückung der Distanz vom der Laderaumöffnung zugewandten Ende des äußeren bodengestützten Förderorgans hinein in den Laderaum und damit durch die Laderaumöffnung hindurch ohne jegliche Beschädigungsgefahr des Flugzeugrumpfes oder der Laderaumöffnung geschehen kann, denn das üblicherweise schwer manövrierbare bodengestützte äußere Förderorgan braucht nicht mehr bis in die Laderaumöffnung hinein verfahren zu werden, sondern kann in ausreichendem Sicherheitsabstand zur Laderaumöffnung positioniert werden. Damit ist eine Beschädigung des Flugzeugrumpfes und der Laderaumöffnung ausgeschlossen.

Schlußendlich können mit dem erfindungsgemäßen System die Zeit für das Be- und Entladen eines Flugzeugs wesentlich verkürzt und somit die Betriebskosten gesenkt werden.

So ist bei einer Ausführungsform des erfindungsgemäßen Systems nach Anspruch 3 vorgesehen, daß die Zwischenfördereinrichtung, an deren Unterseite im Überlappungsbereich mit dem äußeren Förderorgan ein Gleitelement, vorzugsweise ein Rad, aufweist. Damit wird eine verschiebliche Abstützung der Zwischenfördereinrichtung auf der Oberseite des äußeren Förderorgans in dessen Endbereich erreicht. Somit kann das im Laderaum des Flugzeugs befindliche Ende der Zwischenfördereinrichtung über die Breite des Laderaums bzw. des Flugzeugrumpfes nach Belieben je nach Bedarf verfahren werden. Dabei genügt in vorteilhafter Weise hierfür bei einer bevorzugten Ausführungsform der Zwischenfördereinrichtung bereits eine Gesamtlänge derselben von etwa 1,50 m. Alternativ könnte die gesamte Länge der Zwischenfördereinrichtung variabel gehalten werden.

Ferner ist in einer bevorzugten Ausführungsform des erfindungsgemäßen Systems nach Anspruch 4 vorgesehen, daß an der Zwischenfördereinrichtung im Überlappungsbereich mit dem äußeren Förderorgan ein Ausleger angelenkt ist, der sich mit dessen, von der Zwischenfördereinrichtung wegweisenden Ende vermittels eines dort angelenkten Gelenks gegen eine Gleitschiene abstützt, die parallel zur Längsrichtung des äußeren Förderorgans orientiert und an diesem befestigt ist. Damit wird eine verschiebliche Abstützung der Zwischenfördereinrichtung in Förderrichtung des äußeren Förderorgans erreicht. Somit ergibt sich in vorteilhafter Weise eine Art Zwangsführung der Zwischenfördereinrichtung und damit eine stets korrekte Ausrichtung des sich auf dem Endbereich des bodengestützten äußeren Förderorgans abstützenden Anfangs der Zwischenfördereinrichtung, so daß beim Betrieb immer sichergestellt ist, daß herangefördertes Stückgut problemlos und fehlerfrei von der äußeren bodengestützten Fördereinrichtung zur Zwischenfördereinrichtung übergeben wird. Gleichzeitig erlaubt diese Art der verschieblichen Abstützung der Zwischenfördereinrichtung eine kräfteschonende und leichte Verschieblichkeit derselben mit einer gleichzeitig sichergestellten einfachen Handhabbarkeit.

Dabei kann bei Bedarf im Bereich des gegen die Gleitschiene sich abstützenden Gelenks erforderlichenfalls zusätzlich eine Bremseinrichtung vorgesehen werden, die eine allzu leichte Verschieblichkeit der Zwischenfördereinrichtung bei Bedarf gezielt hemmen hilft. Ferner könnte zur Arretierung an eine Feststellbremse gedacht werden.

Des weiteren bietet der Ausleger den Vorteile, daß der Anfang der Zwischenfördereinrichtung zwar stets in Förderrichtung des äußeren bodengestützten Förderorgans zwangsgeführt ist, zugleich aber das im Laderaum befindliche Ende der Zwischenfördereinrichtung relativ zu deren Anfang verschwenkt werden kann, so daß die im Laderaum tätige Person die Gesamtausrichtung der Zwischenfördereinrichtung stets auf den laufenden Arbeitsprozeß optimal anpassen kann. Auf diese Weise ist über die gesamte Breite des Laderaums bzw. des Flugzeugrumpfes im Bereich der Ausdehnung der Laderaumöffnung jeder gewünscht Ablagepunkt eines Stückgutes auf der im Laderaum befindlichen, diesen flächig abdeckenden Transporteinrichtung erreichbar.

Entsprechend einer weiter bevorzugten Ausführungsform nach Anspruch 5 ist vorgesehen, daß das dem vorderen Ende der Transporteinrichtung im Laderaum zugewandte Ende der Zwischenfördereinrichtung in der Höhe veränderbar ist relativ zum dem äußeren Förderorgan zugewandten Anfang der Zwischenfördereinrichtung. Damit wird in vorteilhafter Weise sichergestellt, daß herangefördertes Stückgut auch in der Höhe im Laderaum jeden Punkt des Laderaumquerschnitts erreichen kann, ohne daß die im Laderaum tätige Person hierfür beispielsweise durch aktives Anheben des Stückgutes irgendwelche Kräfte aufbringen müßte.

In einer weiter bevorzugten Ausführungsform des Systems nach Anspruch 6 ist vorgesehen, daß ein Endabschnitt der Zwischenfördereinrichtung derart um eine Achse quer zur Förderrichtung der Zwischenfördereinrichtung verschwenkbar ist, daß dieser End-abschnitt horizontal ausrichtbar ist. Damit wird in vorteilhafter Weise erreicht, daß Stückgut, das auf seiner Förderstrecke schlußendlich an diesem Endabschnitt angekommen ist, zugleich jedenfalls dann derart horizontal ausgerichtet ist, daß es ohne große Mühen direkt von dort auf bereits im Laderaum befindliches Stückgut oder, sofern noch kein Stückgut im Laderaum verstaut sein sollte, direkt auf der im Laderaum befindlichen Transporteinrichtung abgelegt werden kann. Umgekehrt ergibt sich beim Entladen der Vorteil, daß durch die im Laderaum befindliche Transporteinrichtung herangefördertes Stückgut ohne weiteren Kraftaufwand auf den stets horizontal ausgerichteten Endabschnitt der Zwischenfördereinrichtung gezogen und dann mit einer Weiterförderung hinaus aus dem Laderaum zugeführt werden kann.

Insbesondere ist vorgesehen, daß ein Anfangsabschnitt der Zwischenfördereinrichtung mit einem vorbestimmten Neigungswinkel, vorzugsweise zwischen 10° bis 30°, zum Neigungswinkel des äußeren Förderorgans orientiert ist. Mit einem derart sanften rampenähnlichen Übergang vom äußeren bodengestützten Förderorgan zur Zwischenfördereinrichtung ist vorteilhaft sichergestellt, daß Stückgut jeglicher Art problemlose vom äußeren Förderorgan zur Zwischenfördereinrichtung übergeben werden kann. Stauungen oder gar Aussetzer sind in diesem Bereich vermieden. Zugleich ergibt sich mit diesem Neigungswinkel ein guter Kompromiß zwischen einem sanften Übergang von dem äußeren Förderorgan zur Zwischenfördereinrichtung und dem in diesem Bereich für konstruktive Maßnahmen, wie beispielsweise der Anbindung des Auslegers, der Unterbringung beispielsweise eines Elektromotors zum Antrieb der Förderbänder, der Ausbildung eines abstützenden Rahmens zur Anlenkung des vorgenannten Gleitelements oder Stützrades, usw., bereitzustellenden Bauraumes.

Gemäß einer weiter bevorzugten Ausführungsform nach Anspruch 7 ist vorgesehen, daß die Zwischenfördereinrichtung mit deren Förderrichtung für die Förderung von Stückgut im wesentlichen quer zur Flugzeuglängsachse um einen Winkelbereich von etwa -30° bis +30° relativ zur Förderrichtung des äußeren Förderorgans verschwenkbar ist. Die Verschwenkbarkeit in einem Bereich von etwa -30° bis +30° gewährleistet in vorteilhafter Weise die gewünschte Förderung des Stückgutes im wesentlichen quer zur Flugzeuglängsachse bzw. in die Tiefe des Laderaums hinein, ohne dabei auf eine angemessene Variation des Endbereich des Zwischenfördereinrichtung in Flugzeuglängsrichtung verzichten zu müssen, so daß damit ein von der Breite der Laderaumöffnung und der Breite des Laderaumquerschnittes aufgespannter Bereich problemlos mit dem Endabschnitt der Zwischenfördereinrichtung erreicht werden kann.

Weiterhin ist vorgesehen, daß Teile der tragenden Struktur der Zwischenfördereinrichtung aus leichten Werkstoffen, wie beispielsweise Aluminium oder Faserverbundwerkstoffen hergestellt sind. Damit ist gewährleistet, daß der ausgehend vom Endabschnitt des äußeren bodengestützten Förderorgans auskragende Teil der Zwischenfördereinrichtung, der je nach Positionierung des Endes der Zwischenfördereinrichtung beim Be- und Entladen von Stückgut im Laderaum mal weiter und mal weniger weit auskragt, immer so leicht gehalten werden kann, daß der gesamte Schwerpunkt der Zwischenfördereinrichtung im Überlappungsbereich mit dem äußeren Förderorgan verbleibt, so daß ein Überkippen des auskragenden Teiles bereits aufgrund der eigenen Gewichtsverteilung ausgeschlossen ist. Dies bietet den zusätzlichen Vorteil, daß im Betrieb und damit im mit Stückgut beladenen Zustand lediglich das zusätzliche Gewicht der geförderten Stückgüter durch den an der Gleitschiene mittels des Gelenks angelenkten Ausleger abzufangen ist, so daß auch dieser relativ leicht bauen kann. Alternativ kann auch ein das äußere bodengestützte Förderorgan umgreifender oder untergreifender Bügel oder dergleichen vorgesehen sein, mit dem ebenfalls ein Verkippen des auskragenden Teils der Zwischenfördereinrichtung ausgeschlossen werden kann. Zugleich bietet die leichte Bauweise der Zwischenfördereinrichtung den Vorteil, daß diese auch aus dem Aspekt des Eigengewichts leicht zu handhaben ist.

Die vorstehend diskutierte Aufgabe wird mit Blick auf das System mit der Zwischenfördereinrichtung erfindungsgemäß in der Weise gelöst, daß eine Zwischenfördereinrichtung zum Be- und Entladen von Stückgut in Laderäumen von Flugzeugen in dem System vorgeschlagen wird, bei der erstmals vorgesehen ist, daß die Zwischenfördereinrichtung wenigstens einen ersten, sich gegen ein äußeres Förderorgan abstützenden Rahmen mit einem ersten Förderorgan, vorzugsweise ein erstes Förderband, aufweist, das beim Beladen Stückgut, vorzugsweise im Bereich Vorderladeraumöffnung des Flugzeugs, vom Flugzeug zugewandten Ende des äußeren Förderorgans entgegennimmt und im wesentlichen quer zur Flugzeuglängsachse weiterfördert. Weiter ist dabei vorgesehen, daß sich an das Ende des ersten Förderorgans ein zweites Förderorgan, vorzugsweise ein zweites Förderband, anschließt, vorzugsweise zur Überbrückung der Distanz am Ende des äußeren Förderorgans ins Innere des Laderaums, das beim Beladen Stückgut, vorzugsweise im Bereich Verladeraumöffnung des Flugzeugs, vom Ende des ersten Förderorgans entgegennimmt und im wesentlichen quer zur Flugzeuglängsachse weiterfördert. Dabei ist erfindungsgemäß weiterhin erstmals vorgesehen, daß sich an dessen Ende ein Drittes Förderorgan, vorzugsweise eine Rollenplatte, anschließt, das beim Beladen Stückgut vom Ende des zweiten Förderorgans entgegennimmt und eine manuelle Drehung des darauf drehbar liegenden Stückgutes derart erlaubt, daß das Stückgut im wesentlichen in Flugzeuglängsrichtung zum vorderen Ende einer im Laderaum vorhandenen Transporteinrichtung dient, weiter beförderbar ist.

Damit ergeben sich ohne Einschränkungen die bereits vorstehend zu beispielhaften Systemen diskutierten Vorteile.

Bei der Zwischenfördereinrichtung des erfindungsgemäßen Systems ist vorgesehen, daß Stückgut beim Entladen vom vorderen Ende der im Laderaum vorhandenen Transporteinrichtung im wesentlichen in Flugzeuglängsrichtung manuell auf das Dritte Förderorgan aufbringbar ist, dort drehbar gelagert und an das zweite Förderorgan übergebbar abgestützt ist, wobei das zweite Förderorgan das Stückgut im wesentlichen quer zur Flugzeuglängsachse zur Laderaumöffnung und/oder durch diese hindurch fördert und an das erste Förderorgan übergibt, welches das Stückgut im wesentlichen quer zur Flugzeuglängsachse zum äußeren Förderorgan weiter fördert und an dieses zur Weiterförderung übergibt.

Die vorstehend gestellte Aufgabe wird durch das erfindungsgemäße System mit der Zwischenfördereinrichtung gemäß Anspruch 1 gelöst.

Das erfindungsgemäße System zum Be- und Entladen von Stückgut in einem Laderaum eines Flugzeugs weist ein Flugzeug, das einen Laderaum umfasst, ein bodengestütztes Förderorgan zum Transport des Stückguts zwischen der Rollfeldebene und einer Laderaumöffnung und eine Zwischenfördereinrichtung zum Be- und Entladen von Stückgut in einem Laderaum des Flugzeugs auf. Die Zwischenfördereinrichtung stützt sich vermittels wenigstens einem ersten Rahmen mit einem ersten Förderorgan, vorzugsweise einem ersten Förderband gegen einen Endabschnitt des äußeren, bodengestützten Förderorgans ab. Die Zwischenfördereinrichtung nimmt über das erste Förderorgan beim Beladen im Bereich vor der Laderaumöffnung des Flugzeugs Stückgut vom flugzeugzugewandten Ende des äußeren, bodengestützten Förderorgans entgegen und fördert es im wesentlichen quer zur Flugzeuglängsachse weiter. Die Zwischenfördereinrichtung weist ein sich an das Ende des ersten Förderorgans anschließendes zweites Förderorgan, vorzugsweise ein zweites Förderband, auf, zur Überbrückung der Distanz vom Ende des äußeren bodengestützten Förderorgans ins Innere des Laderaums, das beim Beladen Stückgut im Bereich der Laderaumöffnung des Flugzeugs vom Ende des ersten Förderorgans entgegennimmt und im wesentlichen quer zur Flugzeuglängsachse weiterfördert. Die Zwischenfördereinrichtung weist ferner ein sich an das Ende des zweiten Förderorgans anschließendes, als Rollenplatte ausgebildetes, drittes Förderorgan auf, das beim Beladen Stückgut vom Ende des zweiten Förderorgans entgegennimmt und eine manuelle Drehung des darauf drehbar liegenden Stückguts derart erlaubt, daß das Stückgut im wesentlichen in Flugzeuglängsrichtung zum vorderen Ende einer im Laderaum vorhandenen Transporteinrichtung hin weiterbeförderbar ist.

Gemäß einer Ausführungsform nach Anspruch 2 ist vorgesehen, das Stückgut beim Entladen von dessen Ablageplatz im Laderaum, vorzugsweise im wesentlichen in Flugzeuglängsrichtung, manuell auf das dritte Förderorgan aufbringbar ist, dort drehbar gelagert und an das zweite Förderorgan übergebbar abgestützt ist, wobei das zweite Förderorgan das Stückgut weiterfördert und an das erste Förderorgan übergibt, welches das Stückgut zum Endabschnitt des bodengestützten, von außen bis in den Laderaum des Flugzeugs reichenden Förderorgans weiterfördert und an dieses zur Weiterförderung übergibt.

Damit lassen sich erfindungsgemäß die vorstehend zu den bereits diskutierten Beispielen eines Systems aufgeführten Vorteile auf das System mit einer Zwischenfördereinrichtung und einem äußeren bodengestützten Förderorgan gemäß Anspruch 1 übertragen, das bis in den Laderaum hinein reicht und somit beispielsweise dem in der DE 100 07 332 A1 oder der WO 98/54073 A1 oder der WO 01/51356 A1 beschriebenen Prinzip im wesentlichen überlegen ist.

Die vorstehend gestellte Aufgabe kann auch durch eine das Beispiel einer Fördereinheit gelöst werden, die nicht Teil der Erfindung ist.

Bei diesem Beispiel der Fördereinheit zum Be- und Entladen von Stückgut, wie insbesondere Gepäckstücke oder dergleichen in einem Laderaum eines Flugzeugs, ist zum Transport des Stückguts dieses von außerhalb des Flugzeugs von der Rollfeldebene an die Laderaumöffnung heran und durch diese hindurch bis in den Laderaum hinein weiter förderbar. Die Fördereinheit weist zum Transport des Stückgutes im Laderaum ein erstes Förderorgan auf. Mit dem ersten Förderorgan ist von außerhalb des Flugzeugs herangeführtes Stückgut beim Beladen des Laderaums im Laderaum sowohl quer als auch längs zur Flugzeuglängsachse in den Flugzeugrumpf hinein bis in den Bereich eines Ablegeplatzes förderbar. Mit dem ersten Förderorgan ist beim Entladen Stückgut aus dem Bereich des Ablegeplatzes bis in die Ebene der Laderaumöffnung zurück förderbar, so daß das Stückgut von dort quer zur Flugzeuglängsachse durch die Laderaumöffnung hindurch nach draußen weg förderbar ist.

Hierbei kann das im Flugzeugrumpf im Laderaum befindliche Ende des ersten Förderorgans quer zur Flugzeuglängsachse horizontal verschieblich oder verschwenkbar ist und ein sich daran anschließendes zweites Förderorgan mit einem sich daran anschließenden dritten Förderorgan aufweist. Hierbei ist für eine Höhenverstellung des dritten Förderorgans im Laderaum durch eine Neigungsverstellung des zweiten Förderorgans erzielbar. Ferner ist das Stückgut im Laderaum beim Beladen - durch Fördermittel des dritten Förderorgans kraftunterstützt oder selbsttätig - durch das dritte Förderorgan gezielt auf dem gewünschten Ablageplatz ablegbar und beim Entladen - durch Fördermittel des dritten Förderorgans kraftunterstützt oder selbsttätig - von dort gezielt heranholbar bzw. aufnehmbar und wegförderbar.

Damit kann die im Laderaum befindliche Person, die mit dem Be- und Entladen des Flugzeugladeraums beauftragt ist, im Falle des Beladens Stückgut, das am im Laderaum befindlichen Ende des ersten Förderorgans von draußen heran gefördert ankommt, über das zweite und das dritte Förderorgan ohne Einsatz der eigenen Muskelkraft bis zum gewünschten Ablageplatz weiterbefördern und dort kraftunterstützt oder selbsttätig ohne nennenswerte eigene Kraftanstrengung auf dem dafür vorgesehenen Ablageplatz vom dritten Förderorgan ablegen lassen. Dementsprechend kann diese Person beim Entladen des Laderaums Stückgut von dessen Ablageplatz kraftunterstützt oder selbsttätig ohne nennenswerte Kraftanstrengung mit dem dritten Förderorgan heranholen bzw. aufnehmen, vom dritten Förderorgan an das zweite Förderorgan übergeben und vom ersten Förderorgan Richtung Laderaumöffnung weg transportieren lassen, so daß es von dort weiter durch die Laderaumöffnung hindurch nach draußen Richtung Rollfeld gefördert werden kann.

Diese Person braucht somit die Stückgüter bzw. Gepäckstücke beispielsweise im häufig recht engen, sogenannten "narrow boddy" Laderaum eines Flugzeugs nicht mehr in kniender oder gebückter Haltung mit einer Drehbewegung aus den Lenden heraus über die Schulter heben, was zu einer dauerhaften Schädigung des Rückgrates führen würde. Die erfindungsgemäße Fördereinheit führt damit in vorteilhafter Weise zu einer Entlastung des Rückens dieser Person und somit zu einer Vermeidung einer Gefährdung deren Gesundheit. Hierbei ist mit dem erfindungsgemäßen System bzw. der Fördereinheit jeder Punkt bzw. Platz im Laderaum gezielt erreichbar, so daß der gesamte Stauraum bzw. die volle Nutzlastkapazität des Laderaums eines Flugzeugs ausgenutzt werden können.

Die bereits vorstehend zum System diskutierten Vorteile sind in analoger Weise auch mit der hier beispielhaft diskutierten Fördereinheit erzielbar.

Umgekehrt sind die hier zur beispielhaften Fördereinheit diskutierten Vorteile hinsichtlich der mit dem dortigen dritten Förderorgan realisierbaren kraftunterstützten oder selbsttätigen Ablage von Stückgut auf dem gewünschten Ablageplatz beim Beladen oder Aufnahme von Stückgut beim Entladen gleichermaßen mit den vorstehend bereits diskutierten erfindungsgemäßen Systemen und Zwischenfördereinrichtungen in analoger Weise mit dem jeweils entsprechenden letzten Förderorgan erzielbar.

So sind in einer Ausführungsform nach Anspruch 8 Einrichtungen oder Elemente zur Unterstützung der Hub-, Senk- oder Schwenk-Bewegung des zweiten und/oder des dritten Förderorgans vorgesehen. Dies können beispielsweise ein beiderseits der Ränder eines Förderorgans angeordneter kraftbetätigter Parallelogramm-Lenker, ein Federspeicherzylinder, elektrisch betriebene Stellglieder oder dergleichen Bauteile sein. Damit läßt sich die erforderliche Positionsveränderung für wechselnde Ablageplätze von Stückgut durch die im Laderaum tätige Person je nach Ausführungsform näherungsweise kraftfrei bis automatisch kraftbetätigt vorgeben.

Ferner ist in einer Ausführungsform nach Anspruch 9 ein Multifunktions-Bedienelement vorgesehen, mit dem beispielsweise die horizontale Ausrichtung des dritten Förderorgans, die Neigung des zweiten Förderorgans, die Positionierung des ersten Förderorgans im Laderaum, die Förderrichtung, die Fördergeschwindigkeit oder weitere Funktionen steuerbar sind. Die im Laderaum tätige Person kann durch Betätigung des Multifunktions-Bedienelements die Fördereinheit dazu veranlassen, ein bestimmtes Stückgut bzw. Gepäckstück beim Beladen gezielt an einem bestimmten Platz abzulegen oder beim Entladen von einem ausgewählten Platz aufzunehmen.

Ein Beispiel einer Fördereinheit weist ein drittes Förderorgan auf, das über Fördermittel verfügt, die als Förderband bzw. Fördergurt ausgebildet sind. Das Förderband verläuft dabei über eine darunter angeordnete steife Gleitplatte. Damit ist sichergestellt, daß das als Förderband ausgebildete Fördermittel eine ausreichend hohe flächige Steifigkeit aufweist, so daß ein Durchhängen des Förderbandes selbst bei kleinen und zugleich schweren Gepäckstücken ausgeschlossen ist. Ferner ist dabei vorgesehen, daß eine dem Stückgut zugewandte Umlenkrolle des Förderbandes einen derart kleinen Durchmesser aufweist, daß die damit ausgebildete Spitze des dritten Förderorgans bzw. dieses selbst im Längsschnitt betrachtet spatel- oder zungenartig ausgebildet ist. Auf diese Weise kann das dritte Förderorgan gegebenenfalls zwischen zwei aufeinander liegende Gepäckstücke zumindest teilweise hinein geschoben werden, so daß dann das auf dem Förderband aufliegende obere Gepäckstück vom Förderband aufgezogen und mitgenommen werden kann. In gleicher Weise kann beim Beladen ein Gepäckstück bzw. Stückgut selbst noch knapp unter der Oberkante bzw. Decke des Laderaums auf die oberste Schicht eines Stückgutstapels aufgelegt werden, da das dritte Förderorgan für sich selbst kaum Platz in der Höhe in Anspruch nimmt. Damit ist der im Laderaum verfügbare Stauraum auch in der Höhe soweit als möglich ausnutzbar. Die im Längsschnitt betrachtete spatel- bzw. zungenartige Ausgestaltung des dritten Förderorgans ermöglicht auch eine besonders nahe Absenkung desselben an den Boden des Laderaums, so daß auch beispielsweise flache Gepäckstücke, die direkt auf dem Laderaumboden aufliegen vom dritten Förderorgan selbsttätig aufgenommen werden können, in dem die Spitze des dritten Förderorgans unter das auf dem Laderaumboden liegende Stückgut geschoben wird und bei rückläufigem Förderband das Stückgut auf das Förderband aufgezogen wird. Je nach Ausführungsform der Fördereinheit kann sich dabei das dritte Förderorgan selbsttätig entsprechend der Vorgaben des Bedienpersonals am Multifunktions-Bedienelement oder sogar automatisch in Abhängigkeit der Befehle von den Regelsystemen in den Stückgutstapel hinein bewegen, um von dort beim Entladen Gepäckstücke aufzunehmen oder beim Beladen zum Stückgutstapel zu einer bestimmten Position hinbewegen, um dort Stückgut gezielt abzulegen. Erforderlichenfalls kann die im Laderaum tätige Person bei auftretenden Problemen eingreifen und gegebenenfalls von Hand nachhelfen.

In einem Beispiel des Förderbandes beträgt der Reibungskoeffizient µ zwischen wenigstens einem Teil des Stückguts und wenigstens einem Teil der dem Stückgut zugewandten Oberfläche des Förderbands über 0,50. In einer besonders bevorzugten Variante beträgt der Reibungskoeffizient µ über 0,60 und ganz besonders bevorzugt über 0,70. Damit ist sichergestellt, daß selbst Gepäckstücke mit besonders glatter Oberflächenbeschaffenheit, wie beispielsweise Hartschalenkoffer, Metallkoffer, Alukisten, glatte Segeltuchtaschen oder dergleichen genau so gut wie Gepäckstücke mit wesentlich griffigerer Oberfläche, wie beispielsweise herkömmliche Lederkoffer, Ledertaschen, Weichschalenkoffer, Stoffsäcke oder sonstige Gepäckstücke aus Leinen, Leder oder weichen Kunststoffen oder dergleichen problemlos vom Förderband des dritten Förderorgans aufgenommen werden können, selbst wenn diese hierfür vom dritten Förderorgan erst aus einem ungeordneten Stapel von übereinander liegenden Gepäckstücken heran-, heraus- oder heruntergezogen werden müßten. Damit ist ferner sichergestellt, daß beim Beladen derlei Stückgüter problemlos vom dritten Förderorgan auf bereits vorhandene Stückgüter aufgelegt werden können, selbst wenn dabei das aufzulegende Stückgut vom dritten Förderorgan über das bereits abgelegte Stückgut unter entsprechender Überwindung der zwischen diesen beiden Stückgütern herrschenden Reibungskräfte an- bzw. darüber hinweg verschoben werden müßte. Mit Reibungsbeiwerten von 0,40 bis 0,80 und bevorzugt zwischen 0,50 bis 0,75 zwischen dem Stückgut und dem Förderband ist bei den vorgenannten Materialien für Stückgut bzw. Gepäckstücke und einer entsprechenden Beschaffenheit der dem Stückgut zugewandten Oberfläche des Förderbandes regelmäßig ein problemloses Fördern bzw. Verschieben desselben sichergestellt.

In einem Beispiel ist vorgesehen, daß das Förderband an dessen dem Stückgut zugewandter Oberfläche die Reibung erhöhende Mittel, wie insbesondere Aufrauhungen, Noppen, Rippen, Stege, Grannen, aufgesetzte Schaum- oder Moosgummteile oder dergleichen aufweist. Derlei reibungserhöhende Mittel können auch dadurch bereit gestellt werden, daß das Förderband mehrschichtig aufgebaut wird. Die Beschaffenheit einer mittleren Schicht kann dabei so gewählt werden, daß mit dem Förderband die im Förderband auftretenden Längs- und ggf. Querkräfte problemlos bewältigt werden können. Eine nach innen zu den Umlenk- oder Antriebsrollen hin weisende Schicht wird so gewählt, daß ein optimales Antreiben des Förderbandes gewährleistet ist. Eine nach außen zu den Gepäckstücken hin weisende Schicht kann abschnittsweise oder vollständig mit entsprechenden reibungserhöhenden Beschichtungen oder dergleichen ausgestattet sein.

Mit derlei reibungserhöhenden Mitteln soll sichergestellt werden, daß Stückgut in jeder Lage aus einem Stapel möglicherweise wirr übereinander gestapelter Stückgüter herausgezogen oder ein zu oberst aufliegendes Stückgut von einem solchen Stapel heruntergezogen und mit dem Förderband des dritten Förderorgans von diesem aufgenommen und an das zweite Förderorgan weiter gegeben werden kann. Bevorzugte Materialien für die Beschichtung zumindest von Teilen der nach außen gewandten Oberfläche des Förderbandes sind beispielsweise verschiedene Gummiarten, Moosgummiauflagen, weiche bzw. haftende Kunststoffbeschichtungen oder Kunststoffauflagen, oder dergleichen. Alternativ ist es denkbar, die Rauhigkeit der nach außen weisenden Oberfläche des Förderbandes zu erhöhen.

Alternativ zum beispielhaften als Förderband ausgebildeten Fördermittel des dritten Förderorgans oder auch ergänzend hierzu kann das dritte Förderorgan als Fördermittel beispielsweise einen beweglichen Schieber, eine schräg anstellbare, einen Greifer oder dergleichen Aktuatoren aufweisen, wie dies bereits zu den vorstehend beschriebenen Varianten erfindungsgemäßer Systeme oder Zwischenfördereinrichtungen diskutiert worden ist. Damit sind weitere unterschiedliche Ausführungsformen des dritten Förderorgans ausbildbar, die alle dazu dienen sollen, daß die im Laderaum befindliche Person selbst im Idealfall keine Kräfte auf das zu fördernde Stückgut auszuüben braucht, sondern daß diese Kräfte von vorgenannten Fördermitteln bzw. Betätigungselementen, die dem dritten Förderorgan zugeordnet sind, aufgebracht werden. Mit derlei Betätigungselementen kann Stückgut - die Kräfte der Bedienperson schonend und damit deren Gesundheit schützend - auf dem gewünschten Ablageplatz abgelegt oder von dort aufgenommen werden. Der zum Förderband des dritten Förderorgans ergänzende bzw. unterstützende oder gar dieses ersetzende Einsatz von Schiebern, Greifern oder dergleichen Fördermitteln ist bei der hier diskutierten Variante einer Fördereinheit mit Blick auf die beim dritten Förderorgan zur Bewegungsrichtung des Fördermittels im wesentlichen gleich laufende Bewegungsrichtung des zu fördernden Stückguts mit zusätzlichen baulichem Aufwand verbunden, um sicherstellen zu können, daß die eingesetzten Fördermittel den Bewegungsfreiraum des zu fördernden Stückgutes nicht unakzeptabel beschränken oder gar behindern. Der hierzu erforderliche bauliche Anpassungsaufwand kann sich je nach Anwendungsfall gerade bei vollautomatisch arbeitenden Fördereinheiten aufgrund eines damit erzielbaren erhöhten Stückgutdurchsatzes, einer verbesserten Fehlertoleranz bzw. einer erhöhten Zuverlässigkeit lohnen.

In einer Ausführungsform nach Anspruch 11 ist vorgesehen, daß mit dem im Laderaum befindlichen Ende des ersten Förderorgans und/oder mit dem zweiten Förderorgan und/oder mit dem dritten Förderorgan kommunizierende automatische Regelsysteme vorhanden sind, die beispielsweise Sensoren, Kameras, Regelkreise, künstliche Intelligenz, Aktuatoren, Stellmotoren oder dergleichen aufweisen können. Auf diese Weise kann ein sich selbst regelndes, automatisch arbeitendes, ggf. auch lernfähiges und sich damit selbst optimierendes System bzw. eine derart automatisch arbeitende Fördereinheit geschaffen werden, so daß auf Personen im Laderaum gänzlich verzichtet werden kann. Damit ist eine Gefährdung dieser Personen vollständig ausgeschlossen. Nicht zuletzt lassen sich mit einem derart automatisierten System oder einer derart automatisierten Fördereinheit wesentlich höhere Durchsatzraten beim Be- und Entladen von Flugzeugen erreichen. Schließlich können die Daten der Regelsysteme protokolliert und abgefragt werden, so daß deren einwandfreies Funktionieren erforderlichenfalls überwacht und nachgewiesen werden kann, oder nicht gänzlich auszuschließender Wartungsbedarf frühzeitig festgestellt und eine gezielte Wartung vorgenommen werden kann.

Mit der vorstehend diskutierten Variante des erfindungsgemäßen Systems kann in vorteilhafter Weise eine im Laderaum befindliche Person gänzlich darauf verzichten, Stückgut vom im Laderaum befindlichen Ende der Fördereinheit manuell mit zum Teil erheblichen Kraftanstrengungen auf dem dafür vorgesehenen Ablageplatz abzulegen oder beim Entladen von dort wegzunehmen und auf das vordere Ende des Förderorgans zu verbringen. Damit ist eine vollständige Entlastung dieser Person möglich. Beim Be- und Entladen des Laderaums ist z.B. auch bei "narrow-body" Flugzeugen trotz der dort vorherrschenden beengten Platzverhältnisse keine Gesundheitsgefährdung des damit beschäftigen Personals zu befürchten. Darüber hinaus bietet die vollautomatische Variante einer erfindungsgemäßen Fördereinheit die Möglichkeit, gänzlich auf Personal beim Be- und Entladen im Laderaum zu verzichten, so daß eine diesbezügliche Gesundheitsgefährdung grundsätzlich ausgeschlossen bleibt, dementsprechend die Kosten beim Be- und Entladen gesenkt werden können, und dieses Personal letztendlich an einer anderen Stelle für andere Aufgaben zur Verfügung steht.

Die Erfindung wird nachfolgend in Ausführungsbeispielen anhand der Figuren der Zeichnung näher erläutert. Es zeigt:
- Fig. 1: eine schematische vereinfachte seitliche Ansicht des erfindungsgemäßen Systems mit der Zwischenfördereinrichtung, beim Beladen;
- Fig. 2: das in Fig. 1 gezeigte Systems als auch die Zwischenfördereinrichtung, beim Entladen;
- Fig. 3: eine schematisch vereinfachte vergrößerte Seitenansicht der in Fig. 1 und 2 gezeigten Variante;
- Fig. 4: eine schematisch vereinfachte Draufsicht auf die in Fig. 1 bis Fig. 3 gezeigte Variante;
- Fig. 5: eine schematisch vereinfachte vergrößerte Teildraufsicht auf die in Fig. 1 bis 4 gezeigte Variante;

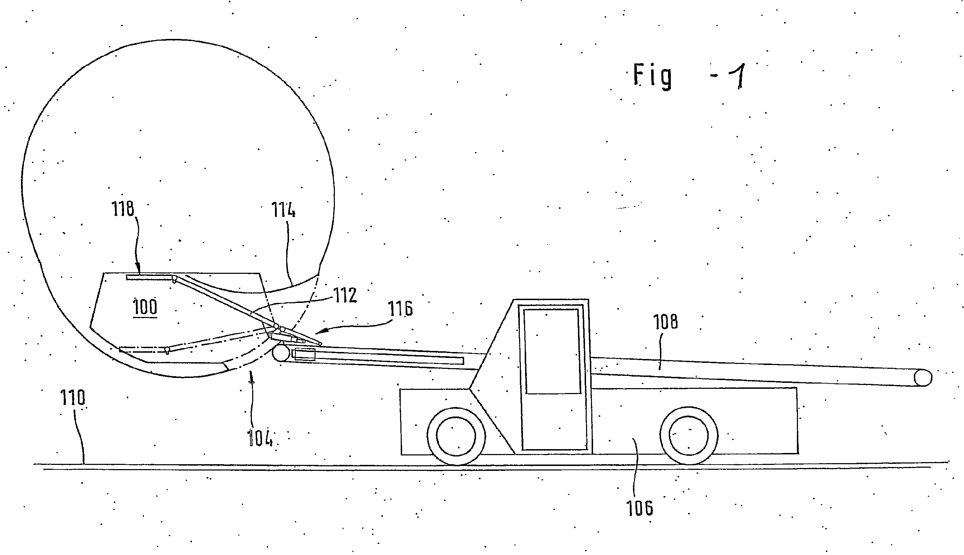

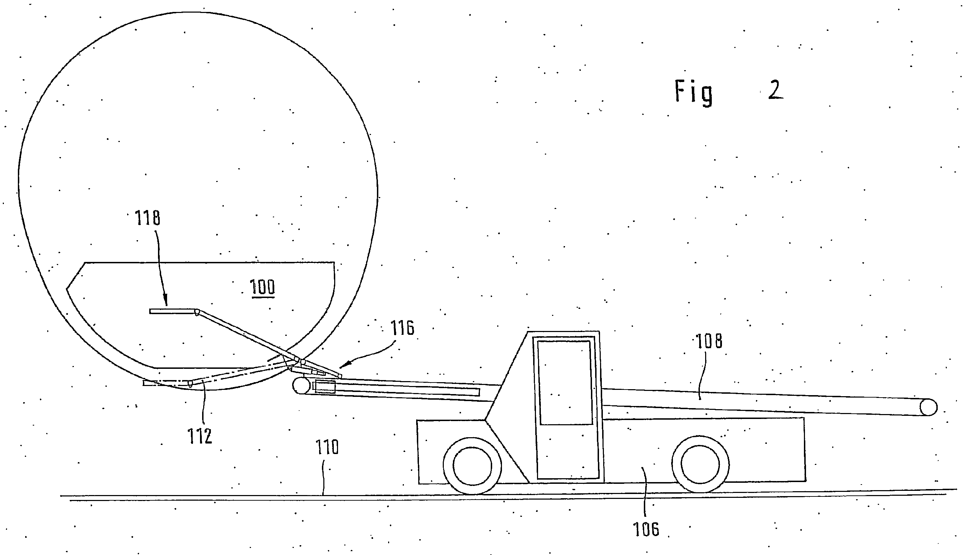

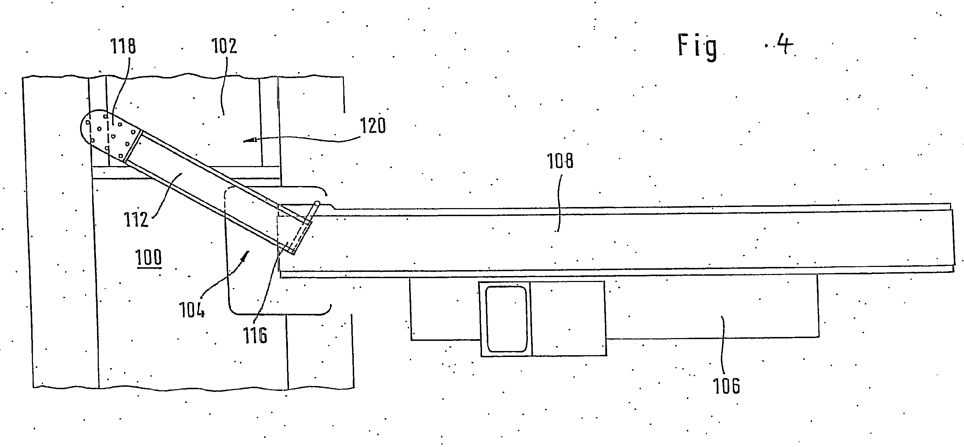

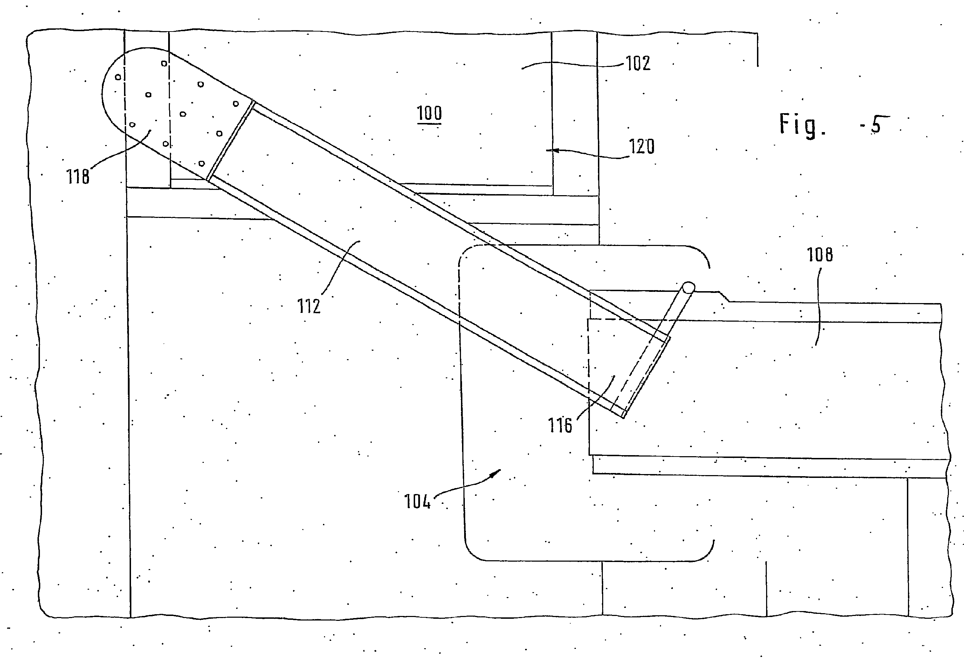

In Fig. 1 bis 5 ist das erfindungsgemäße System mit der Zwischenfördereinrichtung in schematisch vereinfachter Weise dargestellt. Gleiche oder gleichwirkende Teile werden zur Vereinfachung der Diskussion mit den selben Bezugszeichen versehen.

In Fig. 1 ist in einer schematisch vereinfachten seitlichen Ansicht das erfindungsgemäße System zum Be- und Entladen von Stückgut in einem Laderaum 100 eines Flugzeugs beim Beladen gezeigt. Der Boden des Laderaums 100 ist flächig mit einer Transporteinrichtung 102 abgedeckt, die bevorzugt als Transportteppich ausgebildet sein kann. Dieser Transportteppich 102 dient zur, insbesondere taktweisen, Förderung von Stückgut in Richtung auf das innere Ende des Laderaums 100 beim Beladen bzw. von diesem weg beim Entladen. Dabei reicht die Transporteinrichtung 102 mit deren vorderen Ende bis in den Bereich der Laderaumöffnung 104 im Flugzeugrumpf. Seitlich vom Flugzeug steht beispielsweise eine mobile Umschlagmaschine 106, die ein Förderorgan 108 aufweist, zum Transport von Stückgut zwischen der Rollfeldebene 110 und der Laderaumöffnung 104. Zwischen dem flugzeugseitigen Ende des äußeren Förderorgans 108 und dem vorderen Ende der Transporteinrichtung 102 im Laderaum 100 bildet eine Zwischenfördereinrichtung 112 eine Art Brücke, mittels der der Abstand zwischen dem flugzeugseitigen Ende des äußeren Förderorgans 108 und dem vorderen Ende der Transporteinrichtung 102 überbrückt werden kann. Mit der Zwischenfördereinrichtung 112 wird Stückgut beim Beladen zunächst im wesentlichen quer zur Flugzeuglängsachse tiefer in den Flugzeugrumpf hinein gefördert. Daraufhin ist das Stückgut dann im Laderaum 100 manuell drehbar und weiter im wesentlichen in Flugzeuglängsrichtung beförderbar, so daß es auf dem vorderen Ende der Transporteinrichtung 102 im Laderaum 100 abgelegt werden kann. Beim Entladen kann mit der Zwischenfördereinrichtung 112 über das vordere Ende der Transporteinrichtung 102 hinaus in die Ebene der Laderaumöffnung 104 gefördertes Stückgut im wesentlichen quer zur Flugzeuglängsachse durch die Laderaumöffnung 104 hindurch weggefördert werden.

Bei dem hierbei schematisch vereinfacht gezeigten Flugzeug wird die Laderaumluke 114 durch ein Verschwenken nach oben innen geöffnet.

Wie in Figuren 1 bis 3 gut erkennbar, reicht das flugzeugseitige Ende des äußeren Förderorgans 108 bis an den Bereich der Laderaumöffnung 104 heran, jedoch nicht hinein, so daß beim Positionieren der mobilen Umschlagmaschine 106 keine Gefahr der Beschädigung der Laderaumöffnung 104 besteht.

Mit dem erfindungsgemäßen System ist Stückgut auf der Transporteinrichtung 102 im Laderaum 100 beim Beladen gezielt ablegbar und beim Entladen von dort gezielt weg förderbar.

Die Zwischenfördereinrichtung 112 kann sowohl in Förderrichtung des äußeren bodengestützten Förderorgans 108 hin und her verschoben als auch relativ zu diesem um einen Winkel von etwa -30° bis + 30° verschwenkt werden, so daß das dem äußeren Förderorgan 108 zugewandte 116 der Zwischenfördereinrichtung 112 immer mit dem äußeren Förderorgan 108 überlappt und das im Inneren des Laderaums 100 befindliche innere Ende 118 der Zwischenfördereinrichtung 112 immer mit dem der Laderaumöffnung 104 zugewandten Endbereich 120 der Transporteinrichtung 102 überlappt, wie dies in Fig. 20 und 21 veranschaulicht ist.

Die Zwischenfördereinrichtung 112 weist an deren Unterseite im Überlappungsbereich 122 mit dem äußeren Förderorgan 108 ein nicht näher dargestelltes Gleitelement auf, das beispielsweise als Rad oder Rolle ausgebildet sein kann. Dieses Gleitelement dient zur verschieblichen Abstützung der Zwischenfördereinrichtung 112 auf der Oberseite 124 des äußeren Förderorgans 108 in dessen Endbereich.

Die Zwischenfördereinrichtung 112 weist im Überlappungsbereich 122 mit dem äußeren Förderorgan 108 einen Ausleger 126 auf, der zwischen Fördereinrichtung 112 angelenkt ist. Der Ausleger 126 ist mit dessen von der Zwischenfördereinrichtung 108 wegweisenden Ende mit einem dort angelenkten Ende nicht mehr dargestellten Gelenk gegen eine Gleitschiene 128 abgestützt. Die Gleitschiene 128 ist parallel zur Längsrichtung des äußeren Förderorgans 108 orientiert und an diesem befestigt. Die Gleitschiene 128 dient zur verschieblichen Abstützung der Zwischenfördereinrichtung 112 in Förderrichtung des äußeren Förderorgans 108. Hierfür ist in der Fig. 19 dargestellten Variante ein verschieblicher Schlitten 130 vorgesehen, der mit hier nicht näher dargestellten Elementen mit dem Gelenk des Auslegers 126 verbunden ist.

Wie insbesondere in Fig. 1 bis 3 veranschaulicht, ist das dem vorderen Ende 120 der Transporteinrichtung 102 im Laderaum 100 zugewandte Ende 108 der Zwischenfördereinrichtung 112 in der Höhe veränderbar und zwar relativ zu dem äußeren Förderorgan 108 zugewandten Anfang 116 der Zwischenfördereinrichtung 112. Dabei wird insbesondere in Fig. 19 deutlich, daß ein Endabschnitt 132 der Zwischenfördereinrichtung 112 derart um eine Achse 134 quer zur Verrichtung der Zwischenfördereinrichtung 112 verschwenkbar ist, daß dieser Endabschnitt 132 horizontal ausrichtbar ist. Ein Anfangsabschnitt 136 der Zwischenfördereinrichtung 112 ist mit einem vorbestimmten Neigungswinkel, der beispielsweise zwischen 10° bis 30° betragen kann, zum Neigungswinkel des äußeren Förderorgans 108 orientiert.

Dabei ist die Zwischenfördereinrichtung 112 mit deren Förderrichtung für die Förderung von Stückgut im wesentlichen quer zur Flugzeuglängsachse, in dem Winkelbereich von etwa -30° bis +30° relativ zur Förderrichtung des äußeren Förderorgans 108 verschwenkbar.

Die tragende Struktur der Zwischenfördereinrichtung 112 ist aus leichten Werkstoffen, wie beispielsweise Aluminium oder Faserverbundwerkstoffen hergestellt.

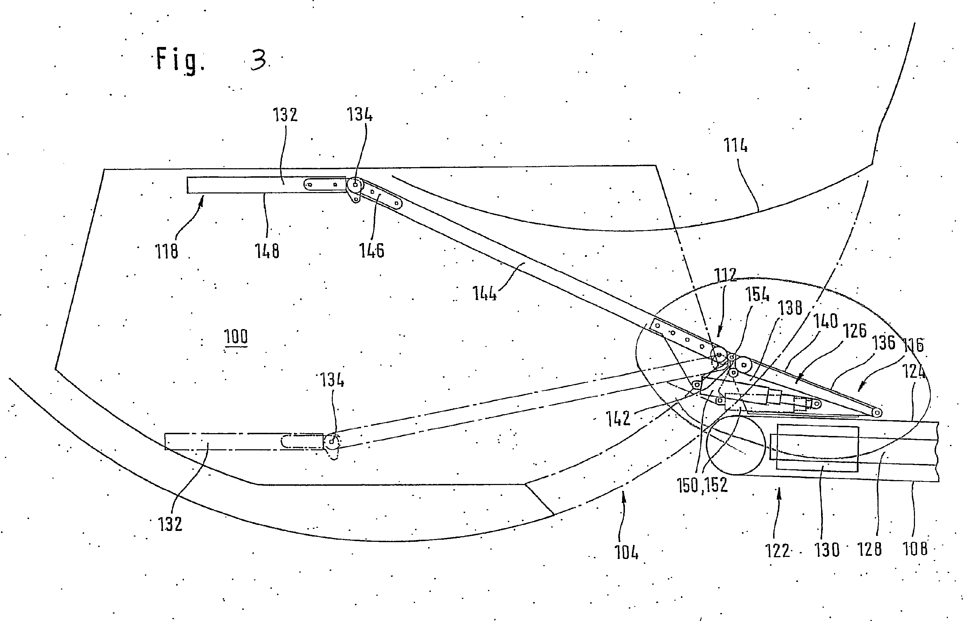

Wie des weiteren insbesondere aus Fig. 3 erkennbar ist, weist die Zwischenfördereinrichtung 112 einen ersten sich gegen das äußere Förderorgan 108 abstützenden Rahmen 138 auf. Der Rahmen 138 trägt ein erstes Förderorgan 140, das beispielsweise als Förderband ausgebildet sein kann. Dieses erste Förderorgan 140 nimmt beim Beladen Stückgut beispielsweise im Bereich der Laderaumöffnung 104 des Flugzeugs vom Flugzeug zugewandten Ende 122 des äußeren Förderorgans entgegen und befördert selbiges im wesentlichen quer zur Flugzeuglängsachse weiter, wobei unter im wesentlichen quer zur Flugzeuglängsachse die vorstehend diskutierte Streubreite der Richtungstoleranz von -30° bis +30° verstanden wird. An das Ende 142 des ersten Förderorgans 140 ist ein zweites Förderorgan 144 angeschlossen, das beispielsweise ein Förderband sein kann. Dieses zweite Förderorgan 144 dient zur Überbrückung der Distanz vom Ende 122 des äußeren Förderorgans 108 ins Innere des Laderaums 100. Das zweite Förderorgan 144 nimmt beim Beladen Stückgut beispielsweise im Bereich der Laderaumöffnung 104 des Flugzeugs vom Ende 142 des ersten Förderorgans 140 entgegen und fördert dieses im wesentlichen quer zur Flugzeuglängsachse tiefer in den Flugzeugrumpf hinein. An das Ende 146 des zweiten Förderorgans 144 schließt sich ein drittes Förderorgan 148 an, welches vorzugsweise als Rollenplatte ausgebildet ist. Beim Beladen nimmt das dritte, als Rollenplatte ausgebildete Förderorgan 148 Stückgut vom Ende 146 des zweiten Förderorgans 144 entgegen und erlaubt eine manuelle Drehung des auf dem dritten Förderorgan 148 drehbar liegenden Stückgut derart, daß das Stückgut im wesentlichen in Flugzeuglängsrichtung zum vorderen Ende 120 einer im Laderaum 100 vorhanden Transporteinrichtung 102 hin weiter beförderbar ist.

Beim Entladen wird dementsprechend vom vorderen Ende 120 der im Laderaum 100 vorhandenen Transporteinrichtung 102 Stückgut zum dritten Förderorgan 148 in der Weise entgegengenommen, daß es von einer in diesem Bereich tätigen Person ohne wesentlichen Kraftaufwand auf das dritte Förderorgan 148 aufbringbar ist, wo es drehbar gelagert ist, so daß es gegebenenfalls manuell gedreht werden kann und an das zweite Förderorgan 144 übergebbar abgestützt ist. Dabei fördert das zweite Förderorgan 144 Stückgut im wesentlichen quer zur Flugzeuglängsachse zur Laderaumöffnung 104 und/oder durch diese hindurch und übergibt das Stückgut an das erste Förderorgan 140, welches das Stückgut im wesentlichen quer zur Flugzeuglängsachse zum äußeren Förderorgan 108 weiterfördert und an dieses zur Weiterförderung übergibt. Am Rahmen 138 des ersten Förderorgans 140 ist ein nicht näher dargestelltes Gleitelement, das beispielsweise als Rad oder Rolle ausgebildet sein kann, angelenkt. Ferner ist am Rahmen 138 des ersten Förderorgans 140 ein Ausleger angelenkt, der beispielsweise als zweiarmiger Ausleger ausgebildet sein kann. Dabei können die beiden Arme 150 und 152 längenveränderlich als Teleskoparme ausgebildet sein, so daß um den beiden Armen mit dem näher dargestellten Gelenk ausgebildetes Dreieck in dessen Geometrie veränderlich ist. Auf diese Weise kann die Zwischenfördereinrichtung 112 einerseits besonders stabil und erschütterungsfrei am äußeren Förderorgan 108 angelenkt werden und andererseits zugleich relativ zu diesem verschwenkbar gehalten sein.

Das zweite Förderorgan ist derart am Rahmen 138 des ersten Förderorgans 140 angelenkt, daß es um eine Achse 154 quer zur Förderrichtung verschwenkbar ist, beispielsweise um einen Winkelbereich von -15° bis +45° relativ zur Horizontalen, zur Veränderung der Höhe des Endes 146 des zweiten Förderorgans 144 relativ zu dessen Anfang. Je nach Bedarf und Ausrichtung des äußersten Förderorgans 108 kann auch eine Verschwenkbarkeit des zweiten Förderorgans 144 um einen Winkelbereich von etwa -30° bis +30° sinnvoll sein. Das dritte Förderorgan 148 ist um eine Achse 134 relativ zum zweiten Förderorgan 144 verschwenkbar, so daß im Betrieb der Zwischenfördereinrichtung 112 horizontal ausrichtbar ist. Dabei sind dem zweiten und/oder dritten Förderorgan dessen Hub-, Senk- oder Schwenk-Bewegung unterstützende Elemente zugeordnet, wie beispielsweise ein beidseits der Ränder des zweiten Förderorgans 144 angeordneter Parallelogramm-Lenker zur Unterstützung einer Hub-, Senk- oder Schwenk-Bewegung, so daß derlei Bewegungen von einer im Laderaum 100 tätigen Person Näherungskraft frei vorgegeben werden können.

Die Zwischenfördereinrichtung 112 verfügt darüber hinaus über ein Multifunktions-Bedienelement, was nicht näher dargestellt ist. Das Multifunktions-Bedienelement ist im Bereich des dritten Förderorgans 148 angeordnet, und kann als Multifunktions-Hebel ausgebildet sein. Vermittels des Multifunktions-Bedienelements kann beispielsweise die horizontale Ausrichtung des dritten Förderorgans 148, die Neigung des zweiten Förderorgans 144, die Positionierung des ersten Förderorgans 140 auf dem äußeren Förderorgan 108, die Förderrichtung, die Fördergeschwindigkeit oder weitere Funktionen gesteuert werden.

Vermittels der nicht näher dargestellten Rolle zur Abstützung der Zwischenfördereinrichtung 112 auf dem äußeren Förderorgan 108 wird im Betrieb ein geringer Spalt zwischen den Förderbändern des ersten Förderorgans 140 der Zwischenfördereinrichtung 112 und dem äußeren Förderorgan 108 von etwa 5 - 10 mm eingehalten, so daß diese beiden dicht benachbarten Förderbänder zwar möglichst nahe beieinander zu liegen kommen, jedoch nicht gegeneinander aufeinander reiben. Damit ist ein optimaler Übergang von Stückgut vom Förderband des äußersten Förderorgans 108 auf das Förderband des ersten Förderorgans 140 der Zwischenfördereinrichtung 112 gewährleistet.

Das nicht näher dargestellte Gelenk mit dem der Ausleger 138 an der Gleitschiene 128 über den Gleitschlitten 130 angelenkt ist, gewährleistet sowohl eine ausreichend starke Abstützung der gesamten Zwischenfördereinrichtung 112 nebst darauf im Betrieb befindlichen Stückguts gegen das im Überlappungsbereich 122 unterhalb des Rahmens 138 befindliche äußere Förderorgan 108. Dabei kann das Gelenk translatorische als auch rotatorische Bewegungen zulassen.

Die Antriebseinrichtung für die Förderorgane der Zwischenfördereinrichtung können beispielsweise elektrische Stellmotoren sein. Es sind aber ebenso hydraulische oder pneumatische Antriebe denkbar. Ebenso ist denkbar, daß die Unterstützungselemente, die die Hub-, Senk- oder Schwenk-Bewegungen der drei Förderorgane der Zwischenfördereinrichtung 112 unterstützen als aktive Elemente, wie beispielsweise Hydraulikzylinder, Pneumatikzylinder oder elektrische Stellmotoren ausgebildet sind.

Die Länge der Zwischenfördereinrichtung beträgt in einer bevorzugten Ausführungsform in etwa 1,50 m bei einer Breite von etwa 0,40 m. Das Gesamtgewicht der Zwischenfördereinrichtung liegt dabei unter 100 kg. Aufgrund der damit geringen Massenkräfte ist eine leichte Bewegbarkeit der Zwischenfördereinrichtung 112 in jedem Betriebszustand garantiert. Zugleich ist das Risiko einer Beschädigung der Flugzeugstruktur insbesondere im Laderaum 100 bei einer versehentlichen Berührung eines Endes der Zwischenfördereinrichtung 112 mit der Flugzeugstruktur aufgrund der geringen Massenkräfte vernachlässigbar gering. Zum weiteren Schutz gegen Beschädigungen und/oder Verletzungen sind die Ränder oder Ecken der Zwischenfördereinrichtung 112 mit entsprechend weichem Material verkleidet.

Die vorliegende Erfindung schlägt damit erstmals ein System zum Be- und Entladen von Stückgut, wie insbesondere Gepäckstücke oder dergleichen in einem Laderaum eines Flugzeugs, vor, mit einer Förderung des Stückgutes in Richtung auf das innere Ende des Laderaumes beim Beladen bzw. von diesem weg beim Entladen, und mit einem Transport des Stückgutes zwischen der Rollfeldebene und der Laderaumöffnung. Bei dem erfindungsgemäßen System ist das Stückgut beim Beladen in Querrichtung zur Flugzeuglängsachse und auch in Flugzeuglängsrichtung in den Flugzeugrumpf hinein förderbar und im Laderaum ablegbar. Beim Entladen in die Ebene der Laderaumöffnung zurück gefördertes Stückgut ist quer zur Flugzeuglängsachse durch die Laderaumöffnung hindurch weg förderbar.

## Patentansprüche

1. System zum Be- und Entladen von Stückgut (6) in einem Laderaum (100) eines Flugzeugs, mit:
einem Flugzeug, das einen Laderaum (100) umfasst,
einem bodengestützten Förderorgan (108) zum Transport des Stückguts zwischen der Rollfeldebene (110) und einer Laderaumöffnung (104), und
einer Zwischenfördereinrichtung (112) zum Be- und Entladen von Stückgut in einem Laderaum des Flugzeugs,
**dadurch gekennzeichnet, daß**
der Laderaum eine den Boden des Laderaumes (100) flächig abdeckende Transporteinrichtung (102) aufweist zur, insbesondere taktweisen, Förderung des Stückgutes in Richtung auf das innere Ende des Laderaumes (100) beim Beladen bzw. von diesem weg beim Entladen, wobei die Transporteinrichtung (102) mit deren vorderem Ende (120) bis in den Bereich der Laderaumöffnung (104) im Flugzeugrumpf reicht,
sich die Zwischenfördereinrichtung (112) vermittels wenigstens einem ersten Rahmen (138) mit einem ersten Förderorgan, vorzugsweise einem ersten Förderband (140) gegen einen Endabschnitt des äußeren, bodengestützten Förderorgans (108) abstützt,
wobei die Zwischenfördereinrichtung (112) über das erste Förderorgan (140) beim Beladen im Bereich vor der Laderaumöffnung (104) des Flugzeugs Stückgut vom flugzeugzugewandten Ende (122) des äußeren, bodengestützten Förderorgans (108) entgegennimmt und im wesentlichen quer zur Flugzeuglängsachse weiterfördert,
wobei die Zwischenfördereinrichtung (112) ein sich an das Ende (142) des ersten Förderorgans (140) anschließendes zweites Förderorgan (144), vorzugsweise ein zweites Förderband, aufweist, zur Überbrückung der Distanz vom Ende (122) des äußeren bodengestützten Förderorgans (108) ins Innnere des Laderaums (100), das beim Beladen Stückgut im Bereich der Laderaumöffnung (104) des Flugzeugs vom Ende (142) des ersten Förderorgans (140) entgegennimmt und im wesentlichen quer zur Flugzeuglängsachse weiterfördert,
das zweite Förderorgan relativ zum ersten Förderorgan quer zur Flugzeuglängsachse verschieblich gelagert ist, und
wobei die Zwischenfördereinrichtung (112) ferner ein sich an das Ende (146) des zweiten Förderorgans (140) anschließendes, als Rollenplatte ausgebildetes, drittes Förderorgan (148) aufweist, das beim Beladen Stückgut vom Ende (146) des zweiten Förderorgans (144) entgegennimmt und eine manuelle Drehung des darauf drehbar liegenden Stückguts derart erlaubt, daß das Stückgut im wesentlichen in Flugzeuglängsrichtung zum vorderen Ende (120) der im Laderaum (100) vorhandenen Transporteinrichtung (102) hin weiterbeförderbar ist.

2. System zum Be- und Entladen von Stückgut (6) in einem Laderaum (100) eines Flugzeugs nach Anspruch 1, **dadurch gekennzeichnet, daß** Stückgut beim Entladen von dessen Ablageplatz im Laderaum (100), vorzugsweise im wesentlichen in Flugzeuglängsrichtung, manuell auf das dritte Förderorgan (148) aufbringbar ist, dort vermittels der Rollenplatte drehbar gelagert und an das zweite Förderorgan (144) übergebbar abgestützt ist, wobei das zweite Förderorgan (144) das Stückgut weiterfördert und an das erste Förderorgan (140) übergibt, welches das Stückgut zum Endabschnitt des bodengestützten Förderorgans (108) weiterfördert und an dieses zur Weiterförderung übergibt.

3. System zum Be- und Entladen von Stückgut (6) in einem Laderaum (100) eines Flugzeugs nach Anspruch 1 oder 2, **dadurch gekennzeichnet, daß** der Rahmen (138) des ersten Förderorgans (140) an dessen Unterseite ein Gleitelement, vorzugsweise ein Rad, aufweist, zur im wesentlichen in Förderrichtung des äußeren bodengestützten Förderorgans (108) verschieblichen Abstützung des ersten Förderorgans (140) auf der Oberseite (124) des äußeren, bodengestützten Förderorgans (108) im Bereich dessen flugzeugzugewandten Endabschnitts (122).

4. System zum Be- und Entladen von Stückgut (6) in einem Laderaum (100) eines Flugzeugs nach einem der Ansprüche 1 bis 3, **dadurch gekennzeichnet, daß** am Rahmen (138) des ersten Förderorgans (140) ein Ausleger (126), vorzugsweise ein zwei-armiger Ausleger, angelenkt ist, der sich mit dessen vom Rahmen (138) wegweisenden Ende vermittels eines dort angelenkten Gelenks gegen eine Gleitschiene (128) abstützt, die parallel zur Längsrichtung des äußeren, bodengestützten Förderorgans (108) orientiert und an diesem befestigt ist, zur im wesentlichen in Förderrichtung des äußeren, bodengestützten Förderorgans (108) verschieblichen Abstützung des ersten Förderorgans (140) an dem äußeren, bodengestützten Förderorgan (108).

5. System zum Be- und Entladen von Stückgut (6) in einem Laderaum (100) eines Flugzeugs nach einem der Ansprüche 1 bis 4, **dadurch gekennzeichnet, daß** das zweite Förderorgan (144) derart am Rahmen (138) des ersten Förderorgans (140) angelenkt ist, daß es um eine Achse (154) quer zur Förderrichtung, vorzugsweise um einen Winkelbereich von -15° bis +45°, verschwenkbar ist, zur Veränderung der Höhe des Endes (146) des zweiten Förderorgans (144) relativ zu dessen Anfang.

6. System zum Be- und Entladen von Stückgut (6) in einem Laderaum (100) eines Flugzeugs nach einem der Ansprüche 1 bis 5, **dadurch gekennzeichnet, daß** das dritte Förderorgan (148) derart am Ende (146) des zweiten Förderorgans (144) angelenkt ist, daß es um eine Achse (134) quer zur Förderrichtung des zweiten Förderorgans (144) verschwenkbar ist, so daß es horizontal ausrichtbar ist.

7. System zum Be- und Entladen von Stückgut (6) in einem Laderaum (100) eines Flugzeugs nach einem der Ansprüche 1 bis 6, **dadurch gekennzeichnet, daß** das erste Förderorgan (140) mit dessen Rahmen (138) derart verschwenkbar auf dem äußeren, bodengestützten Förderorgan (108) abgestützt ist, daß eine Verschwenkbarkeit der Zwischenfördereinrichtung (112) um einen Winkelbereich von etwa -30° bis +30° relativ zur Förderrichtung des äußeren Förderorgans (108) wählbar ist.

8. System zum Be- und Entladen von Stückgut (6) in einem Laderaum (100) eines Flugzeugs nach einem der Ansprüche 1 bis 7, **dadurch gekennzeichnet, daß** dem zweiten und/oder dem dritten Förderorgan (144, 148) dessen Hub-, Senk-, oder Schwenk-Bewegung unterstützende Elemente zugeordnet sind, wie beispielsweise ein beidseits der Ränder eines Förderorgans angeordneter Parallelogramm-Lenker zur Unterstützung einer Hub-, Senk- oder Schwenk-Bewegung, damit derlei Bewegungen von einer im Laderaum (100) tätigen Person näherungsweise kraftfrei vorgegeben werden können.

9. System zum Be- und Entladen von Stückgut (6) in einem Laderaum (100) eines Flugzeugs nach einem der Ansprüche 1 bis 8, **dadurch gekennzeichnet, daß** im Bereich des dritten Förderorgans (148) ein Multifunktions-Bedienelement vorgesehen ist, vermittels dem beispielsweise die horizontale Ausrichtung des dritten Förderorgans (148), die Neigung des zweiten Förderorgans (144), die Positionierung des ersten Förderorgans (140) auf dem äußeren Förderorgan (108), die Förderrichtung, die Fördergeschwindigkeit oder weitere Funktionen steuerbar sind.

10. System zum Be- und Entladen von Stückgut (6) in einem Laderaum (100) eines Flugzeugs nach einem der Ansprüche 1 bis 9, **dadurch gekennzeichnet, daß** das Stückgut (6) im Laderaum (1) beim Beladen gezielt am Ablageplatz ablegbar und beim Entladen von dort gezielt wegförderbar ist.

11. System zum Be- und Entladen von Stückgut (6) in einem Laderaum (100) eines Flugzeugs nach einem der Ansprüche 1 bis 10, **dadurch gekennzeichnet, daß** mit der Zwischenfördereinrichtung (112) kommunizierende Sensoren, Kameras, Regelkreise, künstliche Intelligenz oder dergleichen vorgesehen sind.

12. System zum Be- und Entladen von Stückgut (6) in einem Laderaum (100) eines Flugzeugs nach einem der Ansprüche 1 bis 11,
wobei das bodengestützte Förderorgan (108) an der Außenseite des Flugzeuges an die Laderaumöffnung anschließt, und
die Zwischenfördereinrichtung (112) zwischen dem flugzeugseitigen Ende des äußeren, bodengestützten Förderorgans (108) und dem vorderen Ende (120) der Transporteinrichtung (102) im Laderaum (100) angeordnet ist,
wobei mit der Zwischenfördereinrichtung (112) das Stückgut beim Beladen zunächst im wesentlichen quer zur Flugzeuglängsachse tiefer in den Flugzeugrumpf hinein förderbar ist, und
woraufhin das Stückgut dann im Laderaum (100) manuell drehbar und weiter im wesentlichen in Flugzeuglängsrichtung beförderbar und auf dem vorderen Ende (120) der Transporteinrichtung (102) im Laderaum (100) ablegbar ist, und
wobei mit der Zwischenfördereinrichtung (112) beim Entladen über das vordere Ende (120) der Transporteinrichtung (102) hinaus in die Ebene der Laderaumöffnung (104) gefördertes Stückgut im wesentlichen quer zur Flugzeuglängsachse durch die Laderaumöffnung (104) hindurch weg förderbar ist.

## Claims

1. A system for loading and unloading loose cargo (6) in a cargo hold (100) of a plane, comprising:
a plane including a cargo hold (100),
a ground-supported conveyor organ (108) for transporting the loose cargo between the level of the tarmac (110) and a cargo hold opening (104), and
an intermediate conveyor means (112) for loading and unloading loose cargo in a cargo hold (100) of the plane,
**characterized in that**
the cargo hold comprises a transport means (102) covering the area of the floor of the cargo hold (100) for, particularly intermittently, conveying the loose cargo towards the inner end of the cargo hold (100) during loading, or away from it during unloading, wherein the front end (120) of said transport means (102) reaches into the range of the cargo hold opening (104) inside the fuselage of the plane,
the intermediate conveyor means (112) is supported against an end portion of the external ground-supported conveyor organ (108) by means of at least a first frame (138) having a first conveyor organ, preferably a first conveyor belt (140),
wherein during loading in the range in front of the cargo hold opening (104) of the plane, the intermediate conveyor means (112) receives loose cargo on the first conveyor organ (140), from the end of the of said external ground-supported conveyor organ (108) facing the plane, and conveys it on substantially transversely to the longitudinal axis of the plane,
wherein the intermediate conveyor means (112) comprises a second conveyor means (144), preferably a second conveyor belt, following to the end (142) of the first conveyor organ (140), for bridging the distance from the end (122) of said external ground-supported conveyor organ (108) to the inside of the cargo hold (100), receiving loose cargo during loading in the range of the cargo hold opening (104) of the plane, from the end (142) of the first conveyor organ (140), and conveying it on substantially transversely to the longitudinal axis of the plane,
the second conveyor organ being slidably supported in relation to the first conveyor organ transversely to the longitudinal axis of the plane, and
wherein the intermediate conveyor means (112) further comprises a third conveyor means (148), provided as a roller panel, following to the end (146) of the second conveyor organ (144), receiving loose cargo during loading from the end (146) of the second conveyor organ (144), allowing manually rotating of the loose cargo rotatably lying thereon, so that the loose cargo is further conveyable to the front end (120) of the transport means (102) in the cargo hold (100) substantially in the longitudinal axis of the plane.

2. The system for loading and unloading loose cargo (6) in a cargo hold (100) of a plane according to Claim 1, **characterized in that** during unloading from its deposite place in the cargo hold (100), loose cargo may be applied manually on said third conveyor organ (148), preferably substantially in the longitudinal direction of the plane, being rotatably supported thereon by means of the roller panel, and supported suitably for handover to said second conveyor organ (144), wherein said second conveyor organ (144) conveys the loose cargo on and hands it over to said first conveyor organ (140), which conveys the loose cargo on to the end portion of ground-supported conveyor organ (108) and hands it over to the latter for further transport.

3. The system for loading and unloading loose cargo (6) in a cargo hold (100) of a plane according to Claim 1 or 2, **characterized in that** said frame (138) of said first conveyor organ (140) comprises a sliding element, preferably a wheel, at its lower side for a slidable support of said first conveyor organ (140) substantially in the conveying direction of said external ground-supported conveyor organ (108) on the upper side (124) of said external ground-supported conveyor organ (108) in the range of the end portion (122) thereof facing the plane.

4. The system for loading and unloading loose cargo (6) in a cargo hold (100) of a plane according to any one of Claims 1 to 3, **characterized in that** on said frame (138) of said first conveyor organ (140) an outrigger (126), preferably an outrigger having two arms, is linked, supported by its end facing away from said frame (138), via an articulation linked there, against a sliding rail (128) which is oriented in parallel with the longitudinal direction of said external ground-supported conveyor organ (108) and fastened to the latter, for slidable support of said first conveyor organ (140) on said external ground-supported conveyor organ (108) substantially in the conveying direction on said external ground-supported conveyor organ (108).

5. The system for loading and unloading loose cargo (6) in a cargo hold (100) of a plane according to any one of Claims 1 to 4, **characterized in that** said second conveyor organ (144) is linked to said frame (138) of said first conveyor organ (140) such that it may be pivoted about an axis (154) transversely to the conveying direction, preferably about an angular range of -15° to +45°, for modifying the height of the end (146) of said second conveyor organ (144) relative to its beginning.

6. The system for loading and unloading loose cargo (6) in a cargo hold (100) of a plane according to any one of Claims 1 to 5, **characterized in that** said third conveyor organ (148) is linked to the end (146) of said second conveyor organ (144) such that it may be pivoted about an axis (134) transversely to the conveying direction of said second conveyor organ (144), so that it is orientable horizontally.

7. The system for loading and unloading loose cargo (6) in a cargo hold (100) of a plane according to any one of Claims 1 to 6, **characterized in that** said first conveyor organ (140) with its frame (13 8) is pivotally supported on said external ground-supported conveyor organ (108) such that the degree of pivoting said intermediate conveyor means (112) is selectable about an angular range of about - 30° to +30° relative to the conveying direction of said external conveyor organ (108).

8. System according to any one of Claims 1 to 7, **characterized in that** said second and/or third conveyor organ (144, 148) is associated with elements supporting the lifting, lowering, or pivoting movements thereof, such as, e.g., a parallelogram linkage arranged on either side of the edges of a conveyor organ, for supporting a lifting, lowering, or pivoting movement, so that such movements may be predetermined by a person working in the cargo hold (100) approximately free of effort.

9. The system for loading and unloading loose cargo (6) in a cargo hold (100) of a plane according to any one of Claims 1 to 8, **characterized in that** in the range of said third conveyor organ (148) a multi-function operating element is provided, whereby the horizontal orientation of said third conveyor organ (148), the inclination of said second conveyor organ (144), the position of said first conveyor organ (140) on said external conveyor organ (108), the conveying direction, the conveying velocity, or further functions may be controlled.

10. The system for loading and unloading loose cargo (6) in a cargo hold (100) of a plane according to any one of Claims 1 to 9, **characterized in that** loose cargo in the cargo hold (100) being specifically depositable on its deposite place during loading, and being specifically conveyable away therefrom during unloading.

11. The system for loading and unloading loose cargo (6) in a cargo hold (100) of a plane according to any one of Claims 1 to 10, **characterized in that** sensors, cameras, control circuits, artificial intelligence, communicating with said intermediate conveyor means (112) are provided.

12. The system for loading and unloading loose cargo (6) in a cargo hold (100) of a plane according to any one of Claims 1 to 11,
wherein the ground-supported conveyor-organ (108) joins to the cargo hold opening from the outside of the plane, and
the intermediate conveyor means (112) is arranged between the end of the external ground-supported conveyor organ (108) facing the plane and the front end (120) of the transport means (102) in the cargo hold (100),
wherein during loading, loose cargo being at first conveyable by the intermediate conveyor means (112) deeper into the fuselage of the plane substantially transversely to the longitudinal axis of the plane, and
the loose cargo being subsequently manually rotatable in the cargo hold (100) and being further conveyable substantially in the longitudinal direction of the plane, and being depositable on the front end (120) of the transport means (102) in the cargo hold (100), and
wherein during unloading from the front end (120) of the transport means (102) out into the level of the cargo hold opening (104), conveyed loose cargo being conveyable away through the cargo hold opening (104) substantially transversely to the longitudinal axis of the plane.

## Revendications

1. Système de chargement et de déchargement d'un article (6) dans un espace de chargement (100) d'un avion, avec
un avion, qui comprend un espace de chargement (100),
un organe de transport (108) implanté au sol, destiné au transport de l'article entre le plan de la piste (110) et une ouverture de l'espace de chargement (104), et
un dispositif de transport intermédiaire (112) servant au chargement et au déchargement de l'articles dans l'espace de chargement de l'avion,
**caractérisé en ce que**
l'espace de chargement présente un dispositif de transport (102) recouvrant en nappe le sol de l'espace de chargement (100) destiné au transport, en particulier cadencé, de l'article en direction de l'extrémité interne de l'espace de chargement (100) lors du chargement et/ou en s'éloignant de celui-ci lors du déchargement, le dispositif de transport (102) atteignant avec son extrémité avant (120) la zone de l'ouverture de l'espace de chargement (104) dans le fuselage de l'avion,
le dispositif de transport intermédiaire (112) s'appuie, par l'entremise d'au moins un premier châssis (138) pourvu d'un premier organe de transport, de préférence d'un premier convoyeur à bande (140), contre une section d'extrémité de l'organe de transport (108) externe implanté au sol,
le dispositif de transport intermédiaire (112) réceptionnant par l'intermédiaire du premier organe de transport (140), lors du chargement, l'article dans la zone devant l'ouverture de l'espace de chargement (104) de l'avion par l'extrémité tournée vers l'avion (122) de l'organe de transport (108) externe implanté au sol, et l'emportant essentiellement de manière transversale par rapport à l'axe longitudinal de l'avion,
le dispositif de transport intermédiaire (112) présentant un deuxième organe de transport (144) se raccordant à l'extrémité (142) du premier organe de transport (140), de préférence un deuxième convoyeur à bande, servant à surmonter la distance de l'extrémité (122) de l'organe de transport (108) externe implanté au sol à l'intérieur de l'espace de chargement (100), lequel réceptionne lors du chargement l'article dans la zone de l'ouverture de l'espace de chargement (104) de l'avion par l'extrémité (142) du premier organe de transport (140) et l'emporte essentiellement de manière transversale par rapport à l'axe longitudinal de l'avion,
le deuxième organe de transport est logé par rapport au premier organe de transport de manière à pouvoir coulisser de manière transversale par rapport à l'axe longitudinal de l'avion, et
le dispositif de transport intermédiaire (112) présentant en outre un troisième organe de transport (148) réalisé sous la forme d'un plateau à roulettes, se raccordant à l'extrémité (146) du deuxième organe de transport (140), lequel troisième organe de transport réceptionne lors du chargement l'article par l'extrémité (146) du deuxième organe de transport (144) et permet une rotation manuelle de l'article se trouvant sur celui-ci de manière à pouvoir tourner de telle manière que l'article peut continuer à être transporté essentiellement dans le sens longitudinal de l'avion en direction de l'extrémité avant (120) du dispositif de transport (102) présent dans l'espace de chargement (100).

2. Système de chargement et de déchargement d'un article (6) dans un espace de chargement (100) d'un avion selon la revendication 1, **caractérisé en ce que** l'article peut être installé manuellement sur le troisième organe de transport (148) lors du déchargement de son emplacement de dépôt dans l'espace de chargement (100), de préférence essentiellement dans le sens longitudinal de l'avion, peut y être logé de manière à pouvoir tourner par l'entremise du plateau à roulettes et s'appuie de manière à pouvoir être transféré contre le deuxième organe de transport (144), le deuxième organe de transport (144) emportant l'article pour le transférer au premier organe de transport (140), qui emporte l'article en direction de la section d'extrémité de l'organe de transport (108) implanté au sol et le transfère à celui-ci afin de poursuivre son acheminement.

3. Système de chargement et de déchargement d'un article (6) dans un espace de chargement (100) d'un avion selon la revendication 1 ou 2, **caractérisé en ce que** le châssis (138) du premier organe de transport (140) présente au niveau de son côté inférieur un élément coulissant, de préférence une roue, servant à soutenir, de manière à pouvoir coulisser essentiellement dans le sens de transport de l'organe de transport (108) externe implanté au sol, le premier organe de transport (140) sur le côté supérieur (124) de l'organe de transport (108) externe implanté au sol dans la zone de la section d'extrémité (122) de celui-ci tournée vers l'avion.

4. Système de chargement et de déchargement d'un article (6) dans un espace de chargement (100) d'un avion selon l'une quelconque des revendications 1 à 3, **caractérisé en ce qu'**une flèche (126), de préférence une flèche à deux bras, est articulée au niveau du châssis (138) du premier organe de transport (140), laquelle flèche s'appuie par son extrémité s'éloignant du châssis (138), par l'entremise d'une articulation articulée à cet endroit, contre un rail coulissant (128), qui est orienté de manière parallèle par rapport au sens longitudinal de l'organe de transport (108) externe implanté au sol et est fixé à celui-ci, afin d'appuyer, essentiellement dans le sens de transport de l'organe de transport (108) externe implanté au sol, le premier organe de transport (140) contre l'organe de transport (108) externe implanté au sol.

5. Système de chargement et de déchargement d'un article (6) dans un espace de chargement (100) d'un avion selon l'une quelconque des revendications 1 à 4, **caractérisé en ce que** le deuxième organe de transport (144) est articulé au niveau du châssis (138) du premier organe de transport (140) de telle manière qu'il peut pivoter autour d'un axe (154) de manière transversale par rapport au sens de transport, de préférence selon une plage angulaire allant de -15° à +45°, afin de modifier la hauteur de l'extrémité (146) du deuxième organe de transport (144) par rapport au début de celui-ci.

6. Système de chargement et de déchargement d'un article (6) dans un espace de chargement (100) d'un avion selon l'une quelconque des revendications 1 à 5, **caractérisé en ce que** le troisième organe de transport (148) est articulé au niveau de l'extrémité (146) du deuxième organe de transport (144) de telle manière qu'il peut pivoter autour d'un axe (134) de manière transversale par rapport au sens de transport du deuxième organe de transport (144) de sorte qu'il peut être orienté horizontalement.

7. Système de chargement et de déchargement d'un article (6) dans un espace de chargement (100) d'un avion selon l'une quelconque des revendications 1 à 6, **caractérisé en ce que** le premier organe de transport (140) s'appuie par son châssis (138) sur l'organe de transport (108) externe implanté au sol de manière à pouvoir pivoter de telle manière que l'aptitude au pivotement du dispositif de transport intermédiaire (112) peut être choisie dans une plage angulaire allant d'environ -30° à +30° par rapport au sens de transport de l'organe de transport (108) externe.

8. Système de chargement et de déchargement d'un article (6) dans un espace de chargement (100) d'un avion selon l'une quelconque des revendications 1 à 7, **caractérisé en ce que** sont associés au deuxième et/ou au troisième organe de transport (144, 148) des éléments soutenant leur mouvement de levage, d'abaissement ou de pivotement, tels que par exemple un bras oscillant en parallélogramme disposé de part et d'autres des bords d'un organe de transport servant à soutenir un mouvement de levage, d'abaissement ou de pivotement, afin que de tels mouvements puissent être prédéfinis par une personne active dans l'espace de chargement (100) approximativement sans force.

9. Système de chargement et de déchargement d'un article (6) dans un espace de chargement (100) d'un avion selon l'une quelconque des revendications 1 à 8, **caractérisé en ce qu'**est prévu dans la zone du troisième organe de transport (148) un élément de commande multifonction, par l'entremise duquel par exemple l'orientation horizontale du troisième organe de transport (148), l'inclinaison du deuxième organe de transport (144), le positionnement du premier organe de transport (140) sur l'organe de transport (108) externe, le sens de transport, la vitesse de transport ou d'autres fonctionnalités peuvent être commandés.

10. Système de chargement et de déchargement d'un article (6) dans un espace de chargement (100) d'un avion selon l'une quelconque des revendications 1 à 9, **caractérisé en ce que** l'article (6) peut être déposé dans l'espace de chargement (1) lors du chargement de manière ciblée à l'emplacement dédié à cet effet et peut être emporté depuis ce lieu de manière ciblée lors du déchargement.

11. Système de chargement et de déchargement d'un article (6) dans un espace de chargement (100) d'un avion selon l'une quelconque des revendications 1 à 10, **caractérisé en ce que** sont prévus des capteurs, des caméras, des circuits de réglage, une intelligence artificielle ou similaire, lesquels communiquent avec le dispositif de transport intermédiaire (112).

12. Système de chargement et de déchargement d'un article (6) dans un espace de chargement (100) d'un avion selon l'une quelconque des revendications 1 à 11,
l'organe de transport (108) implanté au sol se raccordant au côté extérieur de l'avion au niveau de l'ouverture de l'espace de chargement, et
le dispositif de transport intermédiaire (112) étant disposé dans l'espace de chargement (100) entre l'extrémité côté avion de l'organe de transport (108) externe implanté au sol et l'extrémité avant (120) du dispositif de transport (102),
l'article pouvant être transporté à l'aide du dispositif de transport intermédiaire (112) plus profondément dans le fuselage de l'avion lors du chargement tout d'abord essentiellement de manière transversale par rapport à l'axe longitudinal de l'avion, et
suite à quoi, l'article pouvant alors être tourné manuellement dans l'espace de chargement (100) et être transporté essentiellement dans le sens longitudinal de l'avion, et pouvant être déposé sur l'extrémité avant (120) du dispositif de transport (102) dans l'espace de chargement (100), et
l'article transporté dans le plan de l'ouverture de l'espace de chargement (104) pouvant être acheminé, à l'aide du dispositif de transport intermédiaire (112), lors du déchargement au-delà de l'extrémité avant (120) du dispositif de transport (102), essentiellement de manière transversale par rapport à l'axe longitudinal de l'avion à travers l'ouverture de l'espace de chargement (104).
